# EUROPEAN PATENT APPLICATION

(11) **EP 4 835 315 A1**
(43) Date of publication of application: **04.11.2026**
(21) Application number: 24912277.1
(22) Date of filing: 05.12.2024
(51) Int. Cl.: F16C 41/00, F16C 19/18, F16C 19/52, G01M 13/045

(54) **BEARING DAMAGE DETECTION SYSTEM AND BEARING DAMAGE DETECTION METHOD**

(30) Priority: 27.12.2023 JP 2023220644; 08.10.2024 JP 2024176654
(71) Applicant: NSK Ltd., Tokyo 141-8560 (JP)
(72) Inventor: HIRAKAWA Hiromasa, Fujisawa-shi, Kanagawa 251-8501 (JP); WAKABAYASHI Tatsuo, Fujisawa-shi, Kanagawa 251-8501 (JP)
(74) Representative: Grünecker Patent- und Rechtsanwälte PartG mbB
(86) International application number: PCT/JP2024/043092
(87) International publication number: WO 2025/142387

(57) **Abstract**

A bearing damage detection system includes: a rotation sensor configured to detect rotation of a rolling bearing and output a rotation signal; a rotation fluctuation extraction unit configured to extract rotation fluctuation of the rolling bearing from the rotation signal and generate a rotation fluctuation signal; a frequency analysis unit configured to execute frequency analysis on a waveform of the rotation fluctuation signal and obtain a frequency characteristic; a peak intensity calculation unit configured to obtain a peak intensity corresponding to bearing damage based on the frequency characteristic; and a damage detection unit configured to detect bearing damage of the rolling bearing based on the peak intensity. The rotation fluctuation extraction unit obtains the waveform of the rotation fluctuation signal from which various noises have been removed.

## Description

### TECHNICAL FIELD

The present invention relates to a bearing damage detection system and a bearing damage detection method.

### BACKGROUND ART

A wheel constituting a wheel of an automobile and a disc rotor constituting a disc brake or a drum brake serving as a braking device are rotatably supported on a suspension device of a vehicle body via a rolling bearing unit (hereinafter, referred to as a hub unit) for a vehicle. An outer ring and a hub ring of a hub unit bearing are manufactured by hot forging medium carbon steel having a carbon content of 0.5% by mass to 0.6% by mass and then heat treating a raceway surface. However, since an inner ring raceway surface portion of the hub ring is relatively thick but an outer ring raceway surface portion is thin, damage to the raceway surface such as flaking often occurs in the outer ring raceway surface. When a strong external force is applied to the hub unit, a rolling element may form an indentation on the outer ring raceway surface.

Since the medium carbon steel described above has higher toughness than bearing steel (C: 1% by mass), a crack at a dynamic maximum shear stress position is less likely to propagate toward the raceway surface, and the crack progresses parallel to the raceway surface. In the case of such a crack, the surface is not peeled off in the initial stage, and the portion from the crack to the raceway surface is simply recessed by being placed on the rolling element, so that deterioration in vibration and sound is small. However, when the crack appears on the raceway surface as the crack progresses, peeling progresses rapidly. Similarly, the indentation affects vibration and sound. Such a breakage mode in which peeling progresses rapidly from a certain point of time is not preferable in, for example, a case of a vehicle such as a large truck in which a distance from the driver to a wheel bearing is long and it is difficult for the driver to detect small damage. In consideration of future driverless vehicles and platooning, it is desirable to detect the damage such as peeling or indentation described above of the hub unit bearing at a stage where the damage is small.

For example, as shown in FIG. 43, a hub unit bearing 300 in Patent Literature 1 includes an outer ring 301 including a double-row outer ring raceway 301a, a hub 302 including a double-row inner ring raceway 302a, and a plurality of rolling elements 303 rollably provided between the outer ring raceway 301a and the inner ring raceway 302a. In the hub unit bearing 300, encoders 304 are provided on both sides of the hub 302 in the axial direction, and torque applied to the hub 302 can be detected based on a phase difference between detection signals of sensors (not shown) each facing a respective one of the encoders 304.

### CITATION LIST

### PATENT LITERATURE

Patent Literature 1: JP2004-19934A

### SUMMARY OF INVENTION

### TECHNICAL PROBLEM

The damage of the outer ring and the hub of the hub unit bearing, particularly the outer ring raceway surface as described above is a factor of deterioration in vibration and sound, and is desirably detected at an early stage. However, in the hub unit in Patent Literature 1, even if torque can be detected, damage that occurs cannot be detected. The detection of such damage is not limited to the hub unit bearing of the vehicle, the same applies to other support mechanisms using a rolling bearing, and early detection is desired.

Therefore, an object of the present invention is to provide a bearing damage detection system and a bearing damage detection method capable of early detecting damage to portions such as a raceway surface of a rolling bearing.

### SOLUTION TO PROBLEM

The present invention has the following configuration.
(1) A bearing damage detection system including:
   a rotation sensor configured to detect rotation of a rolling bearing and output a rotation signal;
   a rotation fluctuation extraction unit configured to extract rotation fluctuation of the rolling bearing from the rotation signal and generate a rotation fluctuation signal;
   a frequency analysis unit configured to execute frequency analysis on a waveform of the rotation fluctuation signal and obtain a frequency characteristic;
   a peak intensity calculation unit configured to obtain a peak intensity corresponding to bearing damage based on the frequency characteristic; and
   a damage detection unit configured to detect bearing damage of the rolling bearing based on the peak intensity.
(2) A bearing damage detection method including:
   detecting rotation of a rolling bearing and generating a rotation signal;
   extracting rotation fluctuation of the rotation from the rotation signal and generating a rotation fluctuation signal;
   executing frequency analysis on a waveform of the rotation fluctuation signal and obtaining a vibration peak;
   obtaining a peak intensity corresponding to bearing damage based on the vibration peak; and
   detecting bearing damage of the rolling bearing based on the peak intensity.

### ADVANTAGEOUS EFFECTS OF INVENTION

According to the present invention, damage to portions such as a raceway surface of a rolling bearing can be early detected.

### BRIEF DESCRIPTION OF DRAWINGS

[FIG. 1] FIG. 1 is a schematic configuration diagram of a bearing damage detection system for a hub unit bearing according to a first embodiment.
[FIG. 2] FIG. 2 is a functional block diagram of a control unit.
[FIG. 3] FIG. 3 is a diagram schematically illustrating an arrangement position of a sensor.
[FIG. 4] FIG. 4 is a schematic circuit diagram of a pulse signal generation unit.
[FIG. 5] FIG. 5 is a diagram schematically illustrating a state of generation of vibration when peeling occurs in a part of an outer ring raceway.
[FIG. 6] FIG. 6 is a diagram showing a change given to the sensor output by the relative displacement between an inner ring and an outer ring due to the peeling of the outer ring raceway.
[FIG. 7] FIG. 7 is a diagram schematically illustrating a change in a sensor output signal from the sensor when a rolling element transitions to a floating state, a riding state, and an original rolling state.
[FIG. 8] FIG. 8 is a flowchart showing a procedure for determining damage to the hub unit bearing.
[FIG. 9] FIG. 9 is a diagram showing a pulse signal corresponding to the sensor output signal from the sensor and a spatial waveform obtained by plotting the period of each pulse of the pulse signal.
[FIG. 10] FIG. 10 is a diagram schematically showing a period of any pulse of the pulse signal and a pulse for one rotation of a hub shaft around the pulse.
[FIG. 11] FIG. 11 is a diagram schematically showing a period of any pulse of the pulse signal and a pulse for one rotation of the hub shaft around the pulse.
[FIG. 12] FIG. 12 is a diagram illustrating an example of a waveform until a rotation fluctuation signal is generated by extracting the rotation fluctuation of the hub shaft from the pulse output signal.
[FIG. 13] FIG. 13 is a diagram illustrating an example of a period ratio average value distribution that is an average value of a period ratio difference for each pole of a magnetic encoder.
[FIG. 14] FIG. 14 is a diagram schematically showing a period ratio fluctuation waveform.
[FIG. 15] FIG. 15 is a diagram schematically showing a frequency characteristic obtained by executing FFT processing on the period ratio fluctuation waveform.
[FIG. 16] FIG. 16 is a diagram of a frequency characteristic of a pulse period waveform shown as a reference example.
[FIG. 17] FIG. 17 is a flowchart showing another procedure of the damage determination in which the procedure of the flowchart shown in FIG. 8 is partially changed.
[FIG. 18] FIG. 18 is a flowchart showing another procedure 2 of the damage determination in which the procedure of the flowchart shown in FIG. 8 is partially changed.
[FIG. 19] FIG. 19 is a flowchart illustrating another procedure 3 of the damage determination in which the procedure of the flowchart shown in FIG. 8 is partially changed.
[FIG. 20] FIG. 20 is a flowchart illustrating another procedure 4 of the damage determination in which the procedure of the flowchart shown in FIG. 8 is partially changed.
[FIG. 21] FIG. 21 is a schematic configuration diagram of a damage detection system for a hub unit bearing according to a second embodiment.
[FIG. 22] FIG. 22 is a diagram schematically illustrating an arrangement relation between an inner ring, an outer ring, and a magnetic encoder of the hub unit bearing and a detection region of a rotation sensor and a detection region of the rotation sensor.
[FIG. 23] FIG. 23 is a schematic circuit diagram of a pulse signal generation unit.
[FIG. 24] FIG. 24 is a diagram showing a waveform example of a pulse signal and a phase difference signal.
[FIG. 25] FIG. 25 is a diagram showing the influence of the relative displacement of the inner and outer rings due to the peeling of the outer ring raceway on the sensor output.
[FIG. 26] FIG. 26 is a diagram illustrating the relation between the displacement of the encoder and the phase difference of the detected pulse signal.
[FIG. 27] FIG. 27 is a diagram illustrating an example of changes in pulse signals PL_A and PL_B and a phase difference signal PD.
[FIG. 28] FIG. 28 is a diagram schematically illustrating specific waveforms of the pulse signals PL_A and PL_B and the phase difference signal PD.
[FIG. 29] FIG. 29 is a flowchart showing a procedure for determining damage to the hub unit bearing using two sensors.
[FIG. 30] FIG. 30 is a diagram illustrating the waveforms of the pulse signal PL_A and the pulse signal PL_B.
[FIG. 31] FIG. 31 is a diagram illustrating changes in a period Ti and the phase difference, where the horizontal axis is a space representing the order of pulses of the pulse signal and the vertical axis is time.
[FIG. 32] FIG. 32 is a diagram illustrating an example of a waveform until a rotation fluctuation signal is generated by extracting the rotation fluctuation of the hub shaft from the pulse output signal.
[FIG. 33] FIG. 33 is a diagram illustrating an example of a phase difference ratio average value distribution.
[FIG. 34] FIG. 34 is a diagram schematically showing a phase difference ratio fluctuation waveform.
[FIG. 35] FIG. 35 is a diagram illustrating an example of a frequency characteristic obtained by executing FFT processing on the phase difference ratio fluctuation waveform.
[FIG. 36] FIG. 36 is a flowchart illustrating another procedure 1 of the damage determination in which the procedure of the flowchart shown in FIG. 29 is partially changed.
[FIG. 37] FIG. 37 is a flowchart illustrating another procedure 2 of the damage determination in which the procedure of the flowchart shown in FIG. 29 is partially changed.
[FIG. 38] FIG. 38 is a flowchart illustrating another procedure 3 of the damage determination in which the procedure of the flowchart shown in FIG. 29 is partially changed.
[FIG. 39] FIG. 39 is a control block diagram until a difference waveform is obtained based on the detected pulse signal to obtain a rotation fluctuation waveform.
[FIG. 40] FIG. 40 is a diagram showing a time chart 1 until the damage determination of a rolling bearing is executed based on a detection waveform.
[FIG. 41] FIG. 41 is a diagram showing a time chart 2 until the damage determination of the rolling bearing is executed based on the detection waveform.
[FIG. 42] FIG. 42 is a diagram showing a time chart 3 until the damage determination of the rolling bearing is executed based on the detection waveform.

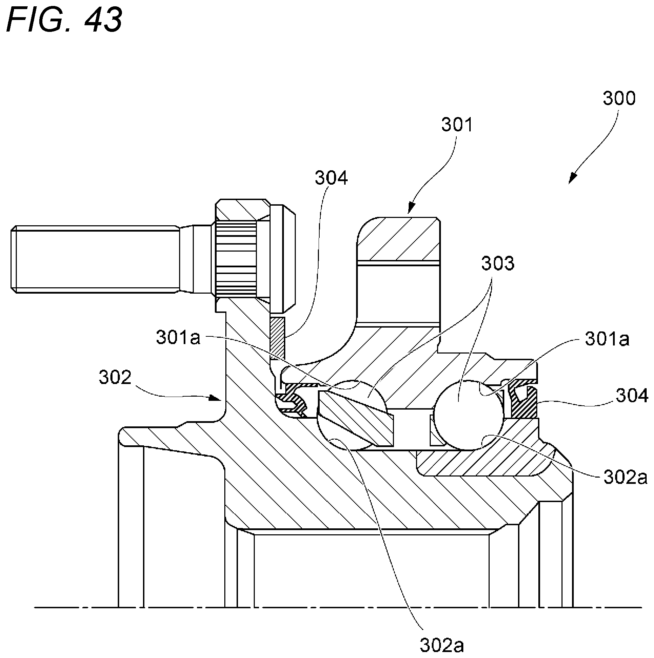

[FIG. 43] FIG. 43 is a configuration diagram of a hub unit bearing in the related art.

### DESCRIPTION OF EMBODIMENTS

Hereinafter, embodiments of the present invention will be described in detail with reference to the drawings. In the following description, a hub unit bearing will be described as an example of a bearing, and the application target of the present invention is not limited thereto.

### <First Embodiment>

### (Configuration of Damage Detection System)

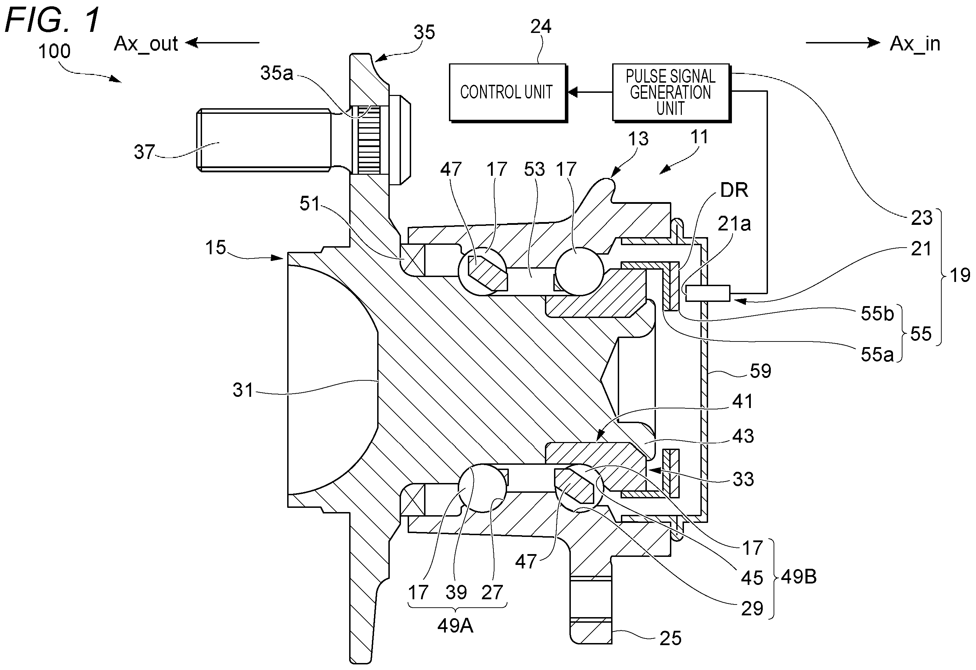

FIG. 1 is a schematic configuration diagram of a bearing damage detection system 100 for a hub unit bearing according to a first embodiment. In the present description, an "axially inner side" related to the hub unit bearing represents the vehicle body side of the hub unit bearing when attached to the vehicle body, and means the right side indicated by an arrow Ax_in in FIG. 1. An "axially outer side" represents the wheel side of the hub unit bearing when attached to the vehicle body, and means the left side indicated by an arrow Ax_out in FIG. 1. Therefore, a bearing portion, an outer ring raceway, and an inner ring raceway that are provided inside are also referred to as a bearing portion in the inner row, an outer ring raceway in the inner row, and an inner ring raceway in the inner row, and a bearing portion, an outer ring raceway, and an inner ring raceway that are provided outside are also referred to as a bearing portion in the outer row, an outer ring raceway in the outer row, and an inner ring raceway in the outer row.

A hub unit bearing 11 shown in FIG. 1 is a hub unit bearing for a driven wheel, and includes an outer ring 13 as a fixation side member, a hub 15 as a rotation side member, a plurality of rolling elements 17, and a rotation detection device 19. In FIG. 1, the hub 15 of the hub unit bearing 11 and a sensor 21 to be described later are shown in horizontal cross section. The bearing damage detection system 100 of the hub unit bearing 11 includes the hub unit bearing 11, a pulse signal generation unit 23 that converts a detection signal from the sensor 21 to be described later of the rotation detection device 19 of the hub unit bearing 11 into a pulse signal and outputs the pulse signal, and a control unit 24. Although the hub unit bearing for a driven wheel is shown here, a hub unit bearing for a driving wheel can also detect bearing damage.

The outer ring 13 includes a stationary side flange 25 on the outer peripheral surface, and includes an outer ring raceway 27 in the outer row and an outer ring raceway 29 in the inner row on the inner peripheral surface. The outer ring 13 is prevented from rotating in a state of being supported on a suspension device (not shown) by coupling and fixing the stationary side flange 25 to a knuckle of the suspension device during use.

The hub 15 includes a hub shaft 31 and an inner ring 33 fitted to the hub shaft 31 and fixed by crimping, and is provided coaxially with the outer ring 13 on the inner side of the outer ring 13 in the radial direction.

The hub shaft 31 is provided with a circular ring-shaped attachment flange 35 that extends radially outward at a portion protruding axially outward from an axially outer opening of the outer ring 13 and that fixes a wheel (a driven wheel) and a rotation member for braking such as a disc rotor (both not shown).

The attachment flange 35 is formed with a plurality of insertion holes 35a, and hub bolts 37 are serration-fitted into the insertion holes 35a. The attachment flange 35 may be fixed to the rotation member for braking such as a wheel and a disc rotor by using the plurality of insertion holes 35a as female screw holes and screwing the hub bolts.

A part of the outer peripheral surface of the hub shaft 31 facing the outer ring raceway 27 in the outer row is provided with an inner ring raceway 39 in the outer row. A small diameter step portion 41 is provided at an axially inner end portion of the outer peripheral surface of the hub shaft 31 facing the outer ring raceway 29 in the inner row. The hub shaft 31 includes a crimping portion 43 that partially constitutes the outer peripheral surface of the small diameter step portion 41 and whose axially inner end portion is deformed radially outward to fix the inner ring 33 by crimping.

An inner ring raceway 45 in the inner row is provided on the outer peripheral surface of the inner ring 33 at a portion facing the outer ring raceway 29 in the inner row. The inner ring 33 is externally fitted to the small diameter step portion 41 of the hub shaft 31 in a state in which the axially outer end surface of the inner ring 33 abuts against the step surface of the small diameter step portion 41, and is crimped and fixed to the hub shaft 31 by the crimping portion 43 in which the axially inner end portion of the small diameter step portion 41 is deformed radially outward.

The rolling elements 17 are rollably provided between the outer ring raceway 27 in the outer row and the inner ring raceway 39 in the outer row and between the outer ring raceway 29 in the inner row and the inner ring raceway 45 in the inner row in a state of being held by cages 47.

The outer ring raceway 27 in the outer row, the inner ring raceway 39 in the outer row, and the rolling elements 17 form a bearing portion 49A in the outer row, and the outer ring raceway 29 in the inner row, the inner ring raceway 45 in the inner row, and the rolling elements 17 form a bearing portion 49B in the inner row.

A seal ring 51 is fixed to the axially outer end portion of the inner peripheral surface of the outer ring 13. The seal ring 51 closes an axially outer end opening of an internal space 53 that is present between the inner peripheral surface of the outer ring 13 and the outer peripheral surface of the hub shaft 31 and in which the plurality of rolling elements 17 are provided. The seal ring 51 is in sliding contact with a large diameter step portion of the outer peripheral surface of the hub shaft 31. The large diameter step portion is located axially outward of the inner ring raceway 39 in the outer row.

The rotation detection device 19 is an axial sensor that is provided in the vicinity of the bearing portion 49B in the inner row, that is, at the axially inner end portion of the hub unit bearing 11 and that detects the rotation speed of the hub 15, and includes a magnetic encoder 55 and the sensor 21.

The magnetic encoder 55 includes a support ring 55a and an encoder body 55b. The support ring 55a has an L-shaped cross section and is formed into an annular shape as a whole by pressing a magnetic metal plate such as a ferritic stainless steel plate such as SUS430 or a rolled steel plate such as SPCC. The axially outer portion of the support ring 55a is externally fitted and fixed to the inner ring 33.

The encoder body 55b is entirely formed into a circular ring shape by a permanent magnet obtained by mixing a magnetic material such as ferrite powder into rubber or thermoplastic resin, and is attached and fixed to the inner side surface of a circular ring portion of the support ring 55a bent to the radially inner side. The inner side surface of the encoder body 55b is magnetized with S poles and N poles alternately at equal pitches in the circumferential direction.

The sensor 21 is a magnetic sensor that detects rotation of the hub 15, particularly rotation of the inner portion of the hub 15. The sensor 21 is provided such that a detection surface 21a faces the magnetic encoder 55, and is fixed to a side cover 59 that closes the inner opening of the outer ring 13. The sensor 21 detects the rotation of the hub 15 by detecting a change in magnetism in a detection region DR of the magnetic encoder 55 facing the detection surface 21a due to the rotation of the hub 15. That is, the sensor 21 and the magnetic encoder 55 function as a rotation sensor, and the rotation sensor and the pulse signal generation unit 23 constitute the rotation detection device 19.

The rotation sensor is not limited to the configuration described above, and may be a combination of a cylindrical encoder and a radial sensor. The rotation may be detected not only by the magnetic encoder but also by another type of device such as an optical encoder or a proximity sensor, a gear-shaped encoder, a gear-shaped exciter ring used in a track, or the like.

The sensor 21 may be, for example, an active wheel speed sensor provided in the hub unit bearing 11. In this case, a detection element such as a Hall IC element or an MR element whose electrical characteristic changes in response to magnetism can be used as the sensor 21. The active wheel speed sensor faces the magnetic encoder, outputs a voltage on the HIGH side when the magnetic flux density is equal to or less than a threshold value, and outputs a voltage on the LOW side when the poles of the encoder approach and the magnetic flux density exceeds the threshold value. The active wheel speed sensor generates a pulse wave corresponding to the rotation speed of the tire. In general, this pulse wave is sent to a vehicle-mounted controller and used for an anti-lock braking system (ABS) or traction control, but by using this pulse wave for detecting damage, it is not necessary to separately add a rotation sensor.

The sensor 21 outputs a rotation detection signal to the pulse signal generation unit 23. The pulse signal generation unit 23 generates a pulse signal based on the received detection signal and outputs the generated pulse signal to the control unit 24.

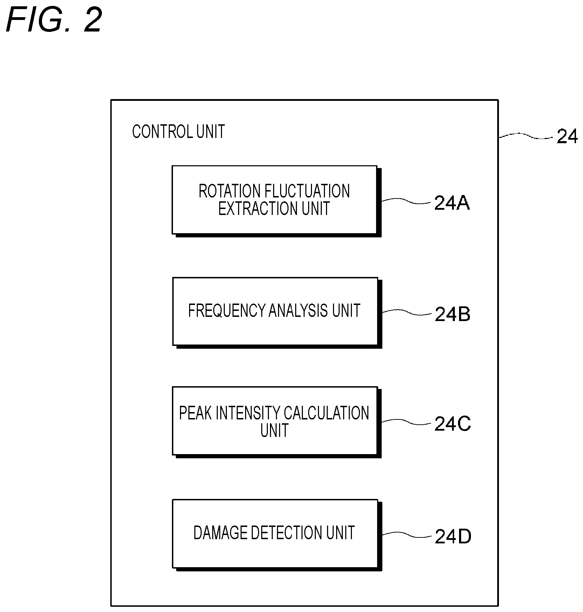

FIG. 2 is a functional block diagram of the control unit 24. The control unit 24 includes a rotation fluctuation extraction unit 24A, a frequency analysis unit 24B, a peak intensity calculation unit 24C, and a damage detection unit 24D. The rotation fluctuation extraction unit 24A extracts the rotation fluctuation of the rolling bearing from the rotation signal output from the rotation sensor to generate a rotation fluctuation signal. The frequency analysis unit 24B executes frequency analysis on the waveform of the rotation fluctuation signal to obtain a frequency characteristic. The peak intensity calculation unit 24C obtains the peak intensity corresponding to the bearing damage based on the frequency characteristic. The damage detection unit 24D detects the bearing damage of the rolling bearing based on the peak intensity.

The control unit 24 executes a procedure for determining damage to the hub unit bearing 11 based on the pulse signal received from the pulse signal generation unit 23. The control unit 24 is implemented as a computer including a processor such as a CPU and a storage device such as a read only memory (ROM), a random access memory (RAM), a hard disk drive (HDD), or a solid state drive (SSD). In this case, the functions of the rotation detection device 19 and the pulse signal generation unit 23 shown in FIG. 1 and the units shown in FIG. 2 can be achieved by the processor executing a predetermined program stored in the storage device. The control unit 24 is not limited to being connected to the hub unit bearing 11 and the rotation detection device 19 directly or wirelessly, and may be connected via communication such as a network. In this case, damage to the hub unit bearing 11 can be determined from a remote position, and convenience of management can be improved. It is also easy to collectively manage a plurality of the hub unit bearings 11.

In the bearing damage detection system 100 of the hub unit bearing 11 according to the present embodiment having the configuration described above, the control unit 24 detects damage occurring in the outer ring raceway or the inner ring raceway with high accuracy based on the pulse signal generated by the rotation detection device 19. In general, the pulse signal includes, in addition to a change in frequency depending on the rotation speed of the tire, rotation unevenness of the tire, and a magnetization error due to a magnetization pitch or magnetization eccentricity of the encoder. Further, when the bearing raceway surface is damaged, the pulse signal also includes an error due to a relative displacement of the outer and inner rings caused by the damage and a relative displacement caused by an impact when the rolling element enters and exits the damaged portion. When these various types of information are included in the pulse signal, it is difficult to extract only the information on the damage. However, in the bearing damage detection system 100, by removing the noises described above included in the pulse signal, the information on the damage can be extracted with high accuracy and accurate evaluation can be executed.

Next, processing of generating the pulse signal described above based on the detection signal from the sensor 21 will be described.

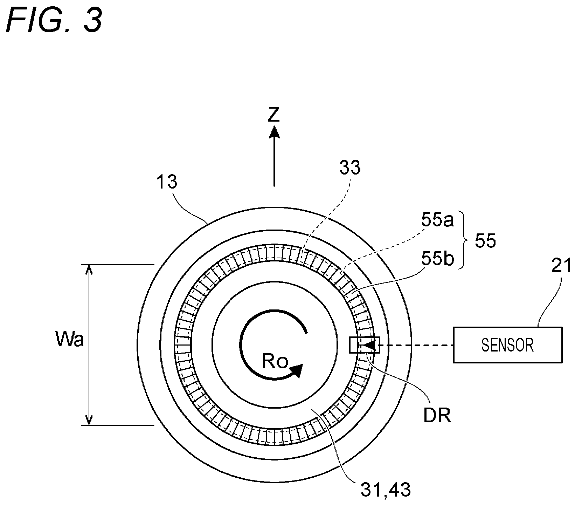

FIG. 3 is a diagram schematically illustrating an arrangement position of the sensor 21. In FIG. 3, the acting direction (generally, a vertical direction Z which is the direction of gravity) of the radial load applied from the inner ring 33 to the outer ring 13 is shown as the upper-lower direction. The sensor 21 is preferably provided in an intermediate region Wa of the annular encoder body 55b in the vertical direction, particularly at a central position. When the rolling element rolls between the outer ring raceway and the inner ring raceway while the radial load is applied from the inner ring 33 to the outer ring 13, the radial vibration generated when the raceway surface is damaged is likely to occur significantly in the vertical direction Z in which the radial load acts. Therefore, when the rotation is detected in the intermediate region Wa close to the center of the inner ring 33 and the outer ring 13 in the vertical direction Z, the displacement in the upper-lower direction can be detected with high sensitivity. In FIG. 3, a portion where rotation is detected by the sensor 21 is schematically shown as the rectangular detection region DR, and the actual detection region DR is a minute region.

For example, when a radial load is applied from the inner ring 33 to the outer ring 13 and the rolling element rolls between the outer ring raceway and the inner ring raceway, radial vibration caused by damage to the raceway surface is remarkable in the vertical direction Z in which the radial load acts. Therefore, when the rotation is detected in the intermediate region Wa close to the center of the inner ring 33 and the outer ring 13 in the vertical direction Z, the displacement in the upper-lower direction can be detected with high sensitivity. The intermediate region Wa described above can be exemplified by a range on the radially inner side of the outer ring raceway surface or the inner ring raceway surface.

However, the detection region DR by the sensor 21 is not limited to the arrangement in the intermediate region Wa described above, and may be set at any position such as upper and lower ends in the vertical direction. In this case, the rotation can be detected, and the degree of freedom in arrangement of the sensor 21 is not reduced.

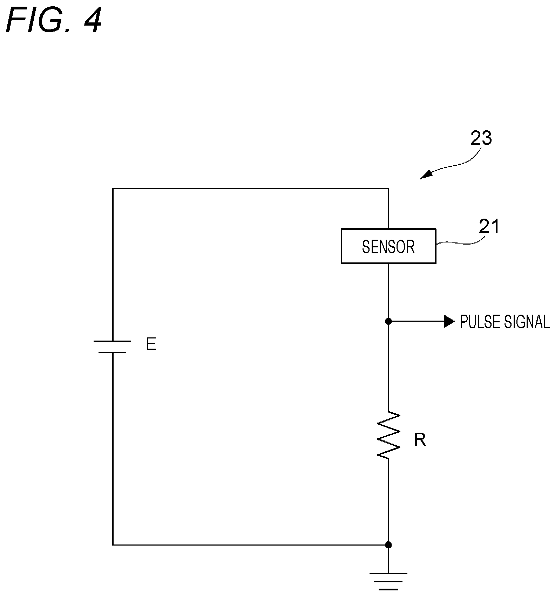

FIG. 4 is a schematic circuit diagram of the pulse signal generation unit 23. For example, the pulse signal generation unit 23 outputs, as a pulse signal, an output signal from the sensor 21 when a drive voltage E adjusted by a resistance value R is applied to the sensor 21. Specifically, when the sensor 21 is of a current output type, the current value output from the sensor 21 is switched by the magnetic flux, and the voltage E based on the relation between the voltage value E, a current value I, and the resistance value R is output as the pulse signal.

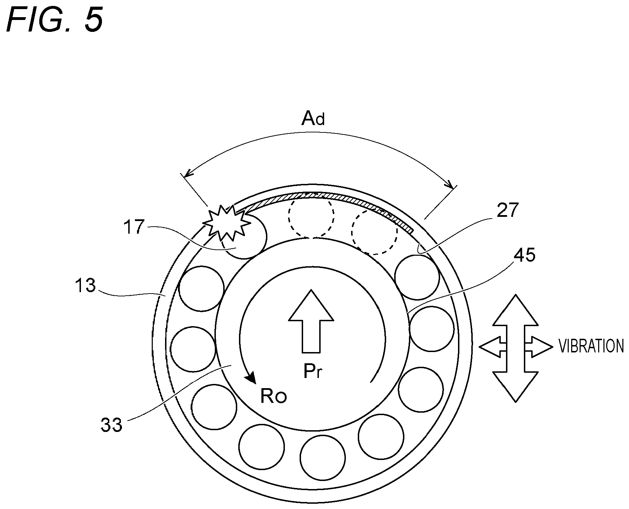

FIG. 5 is a diagram schematically illustrating a state of generation of vibration when peeling occurs in a part of the outer ring raceway 27. For example, a situation is considered in which a radial load Pr toward the upper side in the vertical direction is applied from the inner ring 33 to the outer ring 13, and a defect region Ad in which peeling occurs is present on the upper side of the outer ring raceway 27 in the vertical direction. In this case, when the rolling element 17 rolling between the inner ring 33 and the outer ring 13 enters the defect region Ad, the internal gap between the outer ring raceway 27 and the inner ring raceway 45 is widened by the peeling, and thus the rolling element 17 moving on the peeling surface is in a floating state. When the floating rolling element 17 moves in the defect region Ad along an inner ring rotation direction Ro, reaches the end portion of the defect region Ad, and enters between the outer ring raceway 27 and the inner ring raceway 45 without peeling again, the rolling element 17 collides with the inner ring 33 and the outer ring 13 to generate an impact load for pressing the inner ring 33 downward. Although the load on the inner ring is generated in the horizontal direction in addition to the load on the lower side, the load on the lower side will be particularly described here. Such a collision of the rolling element 17 is repeated, so that vibrations in the upper-lower direction (and the horizontal direction) are generated. That is, since the inner ring 33 and the outer ring 13 relatively move in the upper-lower direction at the defect period with the rotation of the inner ring 33, the damage can be detected by detecting the relative displacement in the upper-lower direction by the sensor 21.

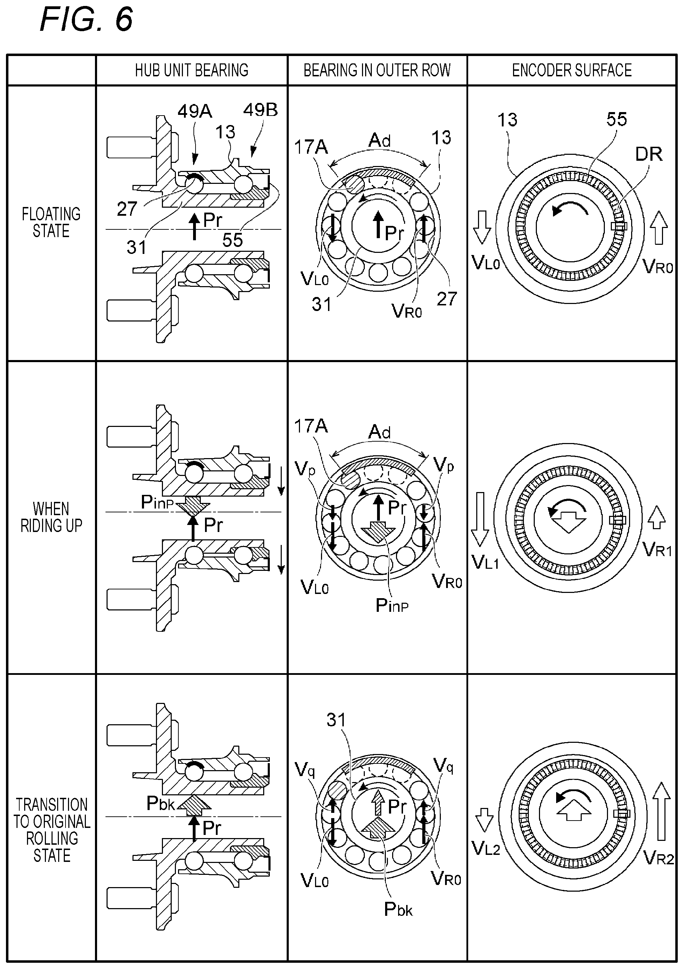

FIG. 6 is a diagram showing a change given to the sensor output by the relative displacement between the inner ring 33 and the outer ring 13 due to the peeling of the outer ring raceway. FIG. 6 shows a case in which, in the bearing portion 49A in the outer row including the outer ring raceway 27 and the inner ring raceway 39 and the bearing portion 49B in the inner row including the outer ring raceway 29 and the inner ring raceway 45, peeling occurs in the outer ring raceway 27 of the bearing portion 49A in the outer row. This hub unit bearing is shown as a hub unit bearing for a drive wheel.

Here, a case in which the radial load Pr (the preload) toward the upper side in the vertical direction is applied from the hub shaft 31 serving as the inner ring of the bearing portion 49A to the outer ring 13 will be described as an example, and damage can be detected by the same procedure even when the preload is not applied. When a rolling element 17A is in the floating state in the defect region Ad in which the peeling occurs in the outer ring raceway 27, a relative speed VR₀ between the hub shaft 31 and the outer ring 13 in the upper-lower direction and a relative speed VL₀ on the other side in the upper-lower direction are equal to each other in the detection region DR on one side in the horizontal direction on which the sensor (not shown) is provided and the other side opposite thereto in the horizontal direction.

Next, when the rolling element 17A reaches the end portion of the defect region Ad and rides up between the outer ring raceway 27 and the inner ring raceway 39 without peeling, an impact load Pinp is applied to the hub shaft 31. Then, the relative speed between the hub shaft 31 and the outer ring 13 in the detection region DR becomes a speed VR₁ smaller than the relative speed VR₀ in the floating state such that, to the upward relative speed VR₀ in the floating state, a speed Vp in the opposite direction (downward) is added by the displacement due to the impact load Pinp. On the other hand, on the other side of the detection region DR in the horizontal direction, the speed Vp due to the impact load Pinp in the same direction as the relative speed VL₀ is applied, and becomes a speed VL₁ higher than the relative speed VL₀ in the floating state.

Then, the hub shaft 31 further rotates, and a return load Pbk acts on the hub shaft 31 during the transition in which the rolling element 17A returns to the original rolling state between the outer ring raceway 27 and the inner ring raceway 39. Then, the relative speed between the hub shaft 31 and the outer ring 13 in the detection region DR becomes a speed VR₂ higher than the relative speed VR₀ in the floating state such that, to the upward relative speed VR₀ in the floating state, a speed Vq in the same direction (upward) is added by the displacement due to the return load Pbk. On the other hand, on the other side of the detection region DR in the horizontal direction, the speed Vq due to the return load Pbk in the opposite direction (upward) to the relative speed VL₀ is applied, and becomes a speed VL₂ smaller than the relative speed VL₀ in the floating state.

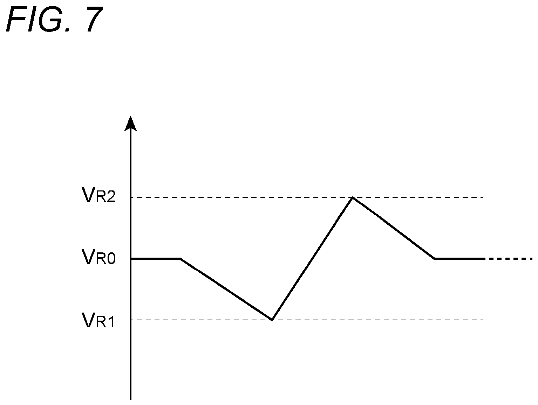

FIG. 7 is a diagram schematically illustrating a change in a sensor output signal from the sensor 21 when a rolling element transitions to a floating state, a riding state, and an original rolling state. The speed detected in the detection region DR changes in the order of VR₀, VR₁, and VR₂. By capturing the change in the sensor output signal due to the speed change from VR₀ to VR₁ and VR₂, the presence of damage can be identified.

### (Procedure of Damage Determination)

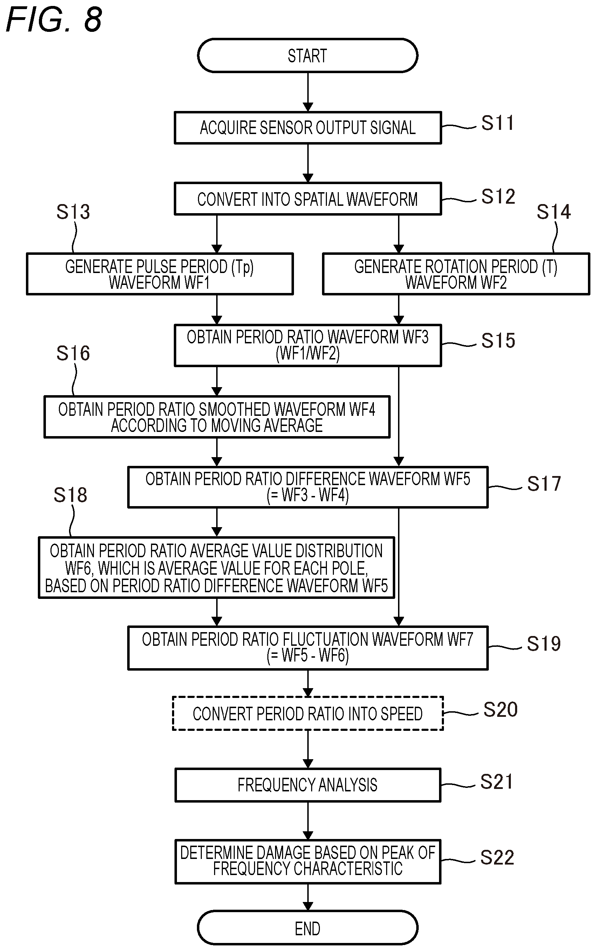

FIG. 8 is a flowchart showing a procedure for determining damage to the hub unit bearing 11. The following procedures are performed based on commands from the control unit 24 shown in FIGS. 1 and 2.

First, the rotation of the hub shaft 31 rotationally driving the hub unit bearing 11 is detected by the sensor 21, and a sensor output signal which is a rotation signal output from the sensor 21 is acquired (S11). The sensor output signal is converted into a pulse signal by the pulse signal generation unit 23.

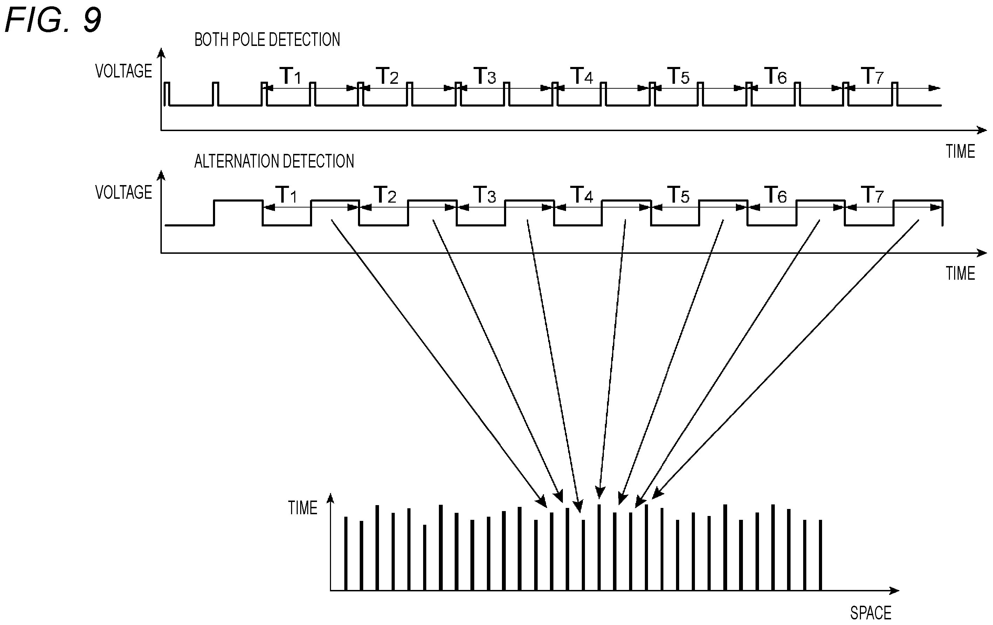

FIG. 9 is a diagram showing a pulse signal corresponding to the sensor output signal and a spatial waveform obtained by plotting the period of each pulse of the pulse signal. Here, a pulse signal when the rotation of the hub 31 is detected by a magnetic encoder and a magnetic sensor is exemplified. Two pulse signals shown on the upper side of FIG. 9 represent magnetic changes of the magnetic encoder 55 passing through the detection region DR of the sensor 21 as the hub shaft 31 rotates. One of the pulse signals indicates an example of both pole detection in which the signal rises when the magnetic field of the N pole or the S pole is detected, and the other indicates an example of alternation detection in which the signal rises when the magnetic field of the N pole or the S pole is detected, and then the signal falls when the magnetic field of the S pole or the N pole is detected.

In the case of the both pole detection, when the pole of the magnetic encoder 55 reaches the detection region DR, the sensor output signal changes from the LOW voltage to the HIGH voltage, and thus the timing of transition from the LOW voltage to the HIGH voltage is used as the timing of the rise described above. On the other hand, in the case of the alternation detection, since the sensor output signal changes from the HIGH voltage to the LOW voltage when the pole of the magnetic encoder 55 reaches the detection region DR, the timing of the transition from the HIGH voltage to the LOW voltage is used as the timing of the rise described above.

For example, when a set of HIGH voltages by the same type of poles is set as one pulse in the case of the both pole detection, and when a set of one HIGH voltage and a LOW voltage subsequent thereto is set as one pulse in the case of the alternation detection, the pulse period (for example, T1 to T7) of each pulse fluctuates when unevenness occurs in the rotation of the hub 31.

Generally, in the design of a semiconductor, the rise accuracy of a signal is high, but the falling accuracy of a signal is often low. Therefore, by using only the rise timing of the signal as described above, the error of the falling time can be eliminated from the spatial waveform. Depending on the characteristic of the signal, it is desirable to use the transition from HIGH to LOW or from LOW to HIGH with higher accuracy as the rise.

A result representing a change in the pulse period of each pulse of the pulse signal described above in time series is a spatial waveform on the lower side of FIG. 9. The spatial waveform shown here is a spatial waveform obtained by plotting the horizontal axis as the i-th (i = 1 to n (n is an integer)) pulse from the starting point (any point) of the pulse for one rotation of a rotating body 12 and the vertical axis as a period (time) for each pulse.

In this spatial waveform, rotation unevenness of the hub 31 and magnetization errors (a pitch error and an eccentricity error) of the magnetic encoder 55 appear as an increase or decrease in time. When the pulse signal is corrected using the spatial waveform, a more accurate rotation speed of the hub 31 can be obtained in which the errors are reduced.

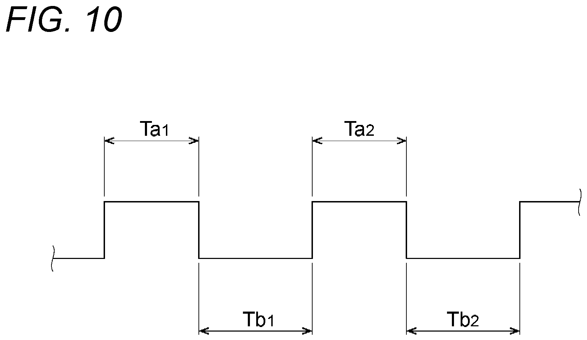

FIG. 10 is a diagram illustrating another example of the definition of the pulse of the pulse signal. The definition of the pulse of the pulse signal described above is an example, and each of the repeatedly generated HIGH voltages may be defined as a pulse (Tₐ₁, Tₐ₂, ···). Each of the repeatedly generated LOW voltages may be defined as a pulse (T_{b1}, T_{b2}, ···). In this case, the period of one pulse can be shortened, and finer control can be executed.

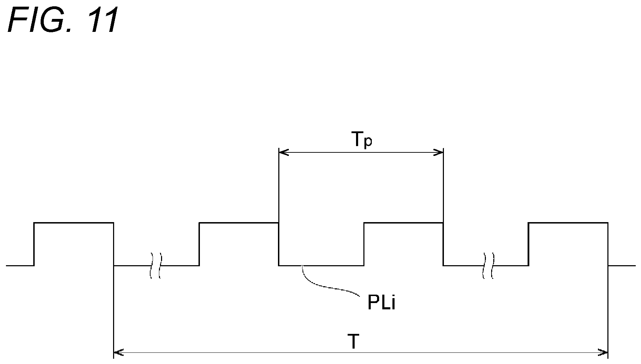

FIG. 11 is a diagram schematically showing a period of any pulse PLᵢ (i is an integer) of the pulse signal and a pulse for one rotation of the hub shaft 31 around the pulse PLᵢ. A pair of pulse periods of the HIGH voltage and the LOW voltage of the pulse PLᵢ shown in FIG. 11 are Tp. A period of one rotation of the hub shaft 31 around the pulse PLᵢ is T.

Based on the spatial waveform described above, a pulse period waveform WF1 representing the transition of the pulse period Tp of each pulse is generated as data for damage detection (S13). For each pulse of the pulse signal, a rotation period waveform WF2 representing the transition of the period T of one rotation around the pulse is generated (S14).

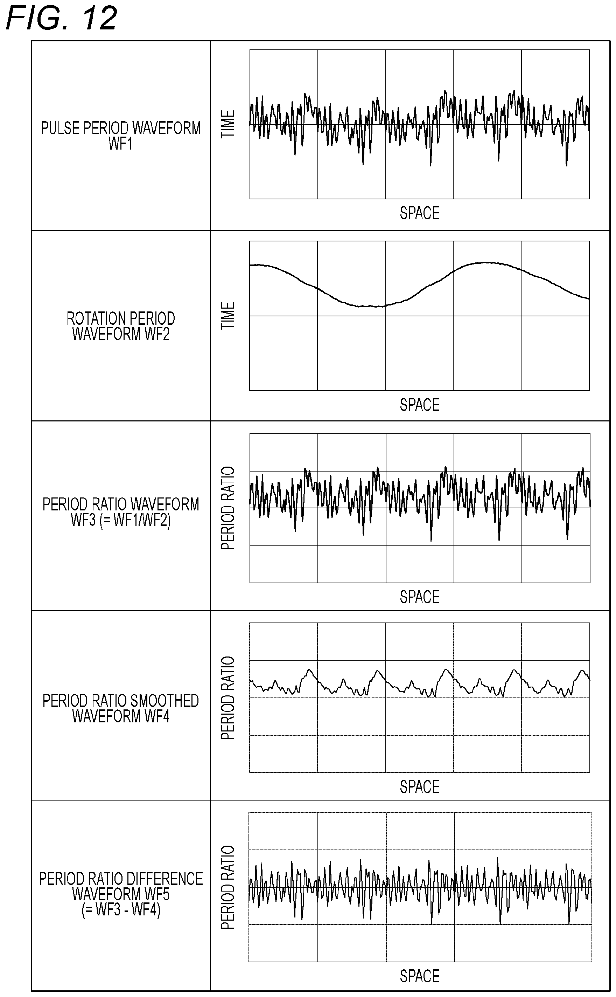

FIG. 12 is a diagram illustrating an example of a waveform until a rotation fluctuation signal is generated by extracting the rotation fluctuation of the hub shaft 31 from the pulse output signal. The waveform data to be described below is for describing the content of signal processing, and is not necessarily information obtained from a hub unit bearing of an actual automobile. The horizontal axis of each waveform is, for example, a spatial value corresponding to the number of pulses for five rotations of the hub shaft 31. After the pulse period waveform WF1 and the rotation period waveform WF2 described above are generated, a period ratio waveform WF3 (= WF1/WF2) representing a ratio Tp/T between the pulse period Tp and a rotation period T is obtained (S15).

The vertical axes of the pulse period waveform WF1 and the rotation period waveform WF2 described above are time, and the vertical axis of the period ratio waveform WF3 is a value of a ratio to one rotation. Therefore, in the period ratio waveform WF3, the influence of the rotation speed error is removed as described above.

Next, the period ratio waveform WF3 is smoothed to obtain a period ratio smoothed waveform WF4 (S16). The smoothing can be calculated by, for example, a moving average of seven points before and after. In the period ratio smoothed waveform WF4, similarly to the period ratio waveform WF3 subjected to the low-pass filter processing, the waveform is smoothed, and the low frequency fluctuation such as the rotation unevenness can be extracted.

In general, the low-pass filter (LPF) includes an infinite impulse response (IIR) and a finite impulse response (FIR). However, since the IIR has a delay element, a phase delay may occur in averaged data. The FIR has a stable processing result but requires a large amount of calculation, and if a high-performance arithmetic element (an expensive CPU or the like) is not used, a phase delay may occur in the averaged data. Therefore, here, the data smoothing processing is executed by the moving average that requires a small amount of calculation and enables high-speed processing. Alternatively, various smoothing processing methods may be appropriately used depending on the situation.

Then, the difference of the period ratio smoothed waveform WF4 from the period ratio waveform WF3 is obtained, and a period ratio difference waveform WF5 (= WF3 - WF4) is obtained from which the fluctuation is extracted (S17). The period ratio difference waveform WF5 is a waveform from which low frequency fluctuation such as rotation unevenness is removed, but displacement due to a change in the position of the rolling element and a magnetization error of the encoder still remain. When the bearing raceway surface or the like is damaged, an error due to the damage of the bearing remains. Depending on the condition, the period ratio smoothed waveform WF4 may not be subtracted from the period ratio waveform WF3, and the period ratio waveform WF3 may be used as the period ratio difference waveform WF5 as it is.

When the computer has a sufficient calculation processing capability, the period ratio smoothed waveform WF4 may be calculated by applying an LPF of a type that does not cause a phase delay to the period ratio waveform WF3. The period ratio difference waveform WF5 may be calculated by applying a high-pass filter (HPF) of a type that does not cause a phase delay to the period ratio waveform WF3.

Next, an average value is calculated for each rotation position, that is, for each pole of the magnetic encoder 55 based on the period ratio difference waveform WF5 (S18). That is, although the period ratio difference waveform WF5 shown in FIG. 12 indicates a range of five rotations of the hub shaft 31, in the magnetic encoder 55 in which, for example, 48 poles are present in one rotation, the values of the period ratio difference waveform WF5 are extracted and averaged for each pole, and a period ratio average value distribution WF6 representing the distribution of the average value for the number of rotations for each pole is obtained.

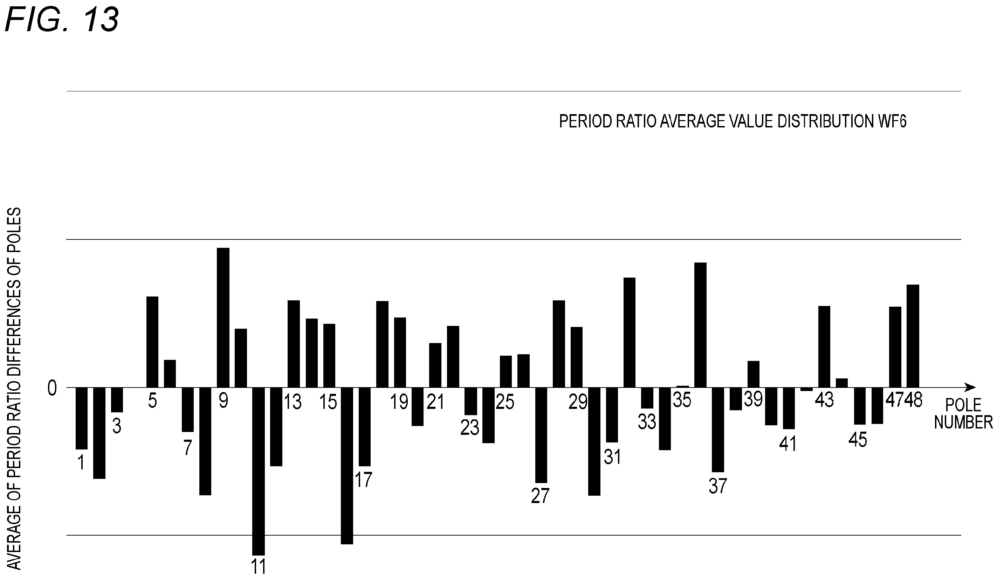

FIG. 13 is a diagram illustrating an example of the period ratio average value distribution WF6 that is an average value of a period ratio difference for each pole of a magnetic encoder. In the period ratio average value distribution WF6, the deviation of the vertical axis from 0 level represents a magnetization error. In FIG. 13, a line (not shown) connecting the average values for each pole of the period ratio average value distribution is the period ratio average value waveform.

Next, a period ratio fluctuation waveform WF7 representing a difference between the period ratio difference waveform WF5 and the period ratio average value waveform WF6 is obtained (S19). The period ratio fluctuation waveform WF7 is obtained by subtracting the value for each pole indicated by the period ratio average value waveform WF6 from the value for each pole of the period ratio difference waveform WF5 for the corresponding poles. Hereinafter, the period ratio difference waveform WF5 is also referred to as a "detection waveform", the period ratio average value waveform WF6 is also referred to as a "reference waveform", and the period ratio fluctuation waveform WF7 is also referred to as a "rotation fluctuation waveform".

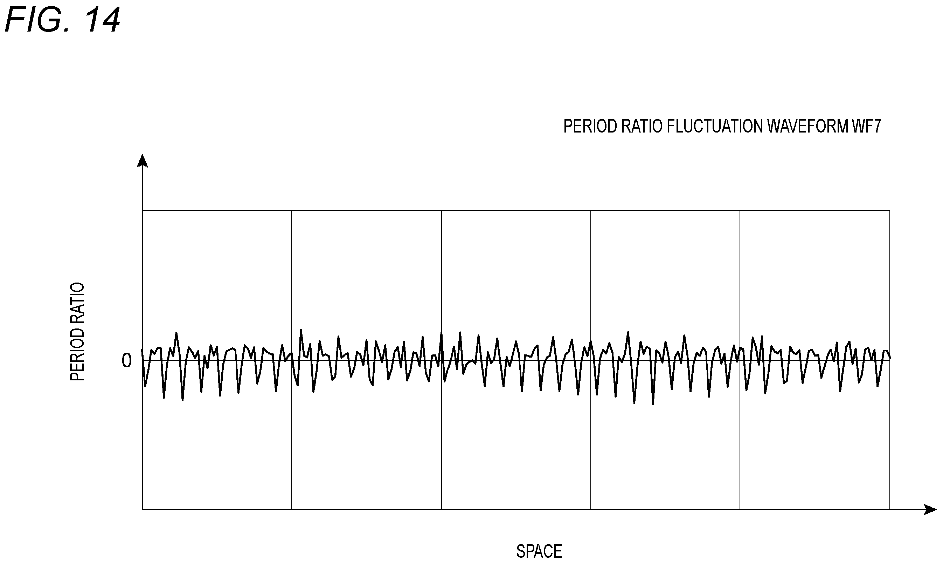

FIG. 14 is a diagram schematically showing the period ratio fluctuation waveform WF7. In the period ratio fluctuation waveform WF7, the magnetization error of the magnetic encoder 55 is removed. That is, since the period ratio fluctuation waveform WF7 removes the fluctuation due to the rotation speed change, the rotation unevenness, and the magnetization error, it can be said that the fluctuation appearing here is caused by the displacement due to the change in the rolling element position and the displacement due to the damage to the bearing when the bearing is damaged.

The period ratio fluctuation waveform WF7 may be a waveform in which the vertical axis is converted from the period ratio to the speed fluctuation by a geometric calculation (S20). In this case, it is easy to intuitively grasp the fluctuation level as the magnitude of the speed. The processing from S12 to S19 and S20 is performed by the rotation fluctuation extraction unit 24A of the control unit 24 shown in FIG. 2.

Next, the frequency analysis unit 24B executes frequency analysis on the period ratio fluctuation waveform WF7 described above to obtain the frequency characteristic (S21). Various analysis methods such as a discrete Fourier transform method such as Fast Fourier Transform (FFT) and a maximum entropy method can be used for the frequency analysis.

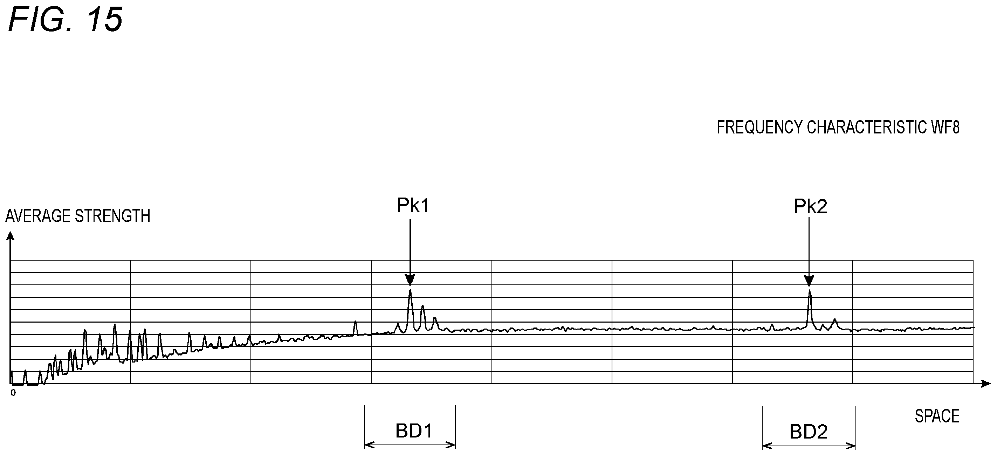

FIG. 15 is a diagram schematically showing a frequency characteristic WF8 obtained by executing FFT processing on the period ratio fluctuation waveform WF7. When the bearing raceway surface is damaged, the period ratio fluctuation waveform WF7 includes a speed fluctuation due to the damage. In the frequency characteristic WF8, when damage such as peeling or indentation occurs on the raceway surface or the like described above, a peak corresponding to the spatial frequency (how many times the defect impacts per rotation) of the defect calculated by variables including a diameter d (mm) of the rolling element of the bearing, a pitch circle diameter D (mm) of the rolling element, the number Z of rolling elements, and a contact angle α (rad) appears. When the peak caused by such bearing damage is equal to or greater than a threshold value, it is determined that the bearing is damaged (S22). Even when the vertical axis of the period ratio fluctuation waveform WF7 is converted into the speed fluctuation, the same frequency characteristic WF8 is obtained.

In the frequency characteristic WF8 shown in FIG. 15, main peaks caused by bearing damage appear as, for example, a defect primary peak Pk1 and a defect secondary peak Pk2. The frequency at which the peak appears can be generally specified by calculation according to the content of the defect. A large number of peaks appear in a low frequency region (for example, in a spatial band BD0), but these are due to the vibration frequency specific to the system and are not due to the damage to the bearing. When the bearing damage is determined based on the peaks Pk1 and Pk2 caused by the bearing damage, for example, the defect primary peak Pk1 of the outer ring is relatively close to the vibration frequency specific to the system, and thus is likely to be mixed with the peak of the vibration frequency specific to the system. On the other hand, when the defect secondary peak Pk2 is separated and less likely to be mixed, the defect secondary peak Pk2 may be used for the determination. Around the defect primary peak Pk1 and the defect secondary peak Pk2, a sideband wave (a side band) may be generated due to modulation with a low frequency natural vibration of the system or due to other factors other than the object to be detected. Therefore, in the determination of the peak intensity due to the bearing damage, spatial bands BD1 and BD2 having a specific length may be set for the peaks Pk1 and Pk2, respectively, and the bearing damage may be determined according to the total value of the peak intensities in the spatial bands BD1 and BD2. Since the contact angle of the rolling element slightly changes depending on the conditions of the preload and the load described above, the theoretical defect frequency and the peak frequency obtained by actual measurement may deviate by several percent. In this case, the omission of detection can also be reliably prevented by setting the spatial bands BD1 and BD2 having the specific length described above. In addition to the determination example described above, extraction and determination of a desired peak and the intensity thereof can be executed by an appropriate algorithm depending on the situation.

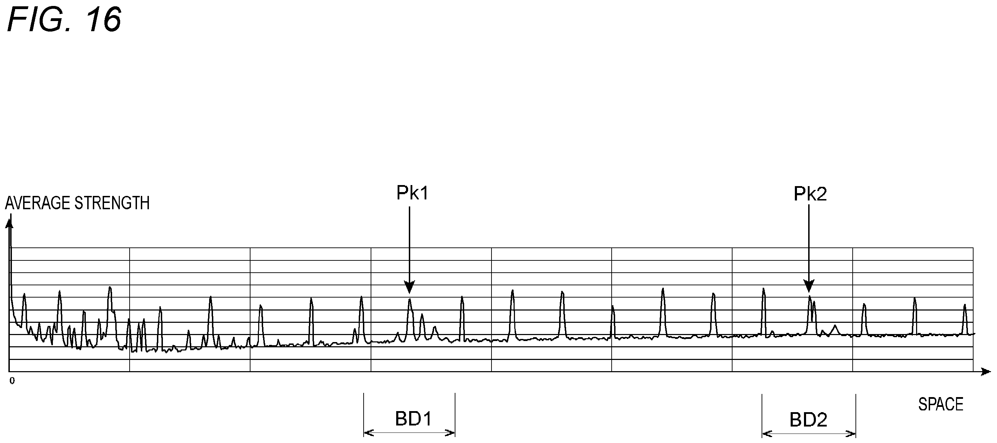

FIG. 16 is a diagram showing a frequency characteristic of the pulse period waveform WF1 shown as a reference example. Since the pulse period waveform WF1 includes defect information other than the bearing damage, such as rotation unevenness and a magnetization error, when the pulse period waveform WF1 is subjected to frequency analysis, an Nth-order rotation peak (N is an integer) and a large number of peaks of the vibration frequency specific to the system appear. In this case, as compared with the case shown in FIG. 15, it is difficult to select and extract the peak due to the defect of the bearing damage, and the determination accuracy of the bearing damage is inevitably lowered. Therefore, by removing the defect information other than the bearing damage from the pulse period waveform WF1 as in the present method, the information on the bearing damage can be easily extracted from the result of the frequency analysis, and the accuracy of the damage determination can be improved. The processing of calculating the peak intensity based on the frequency characteristic described above is executed by the peak intensity calculation unit 24C shown in FIG. 2, and the processing of determining the bearing damage according to the peak intensity is executed by the damage detection unit 24D.

The procedure of the damage determination described above can be changed as appropriate.

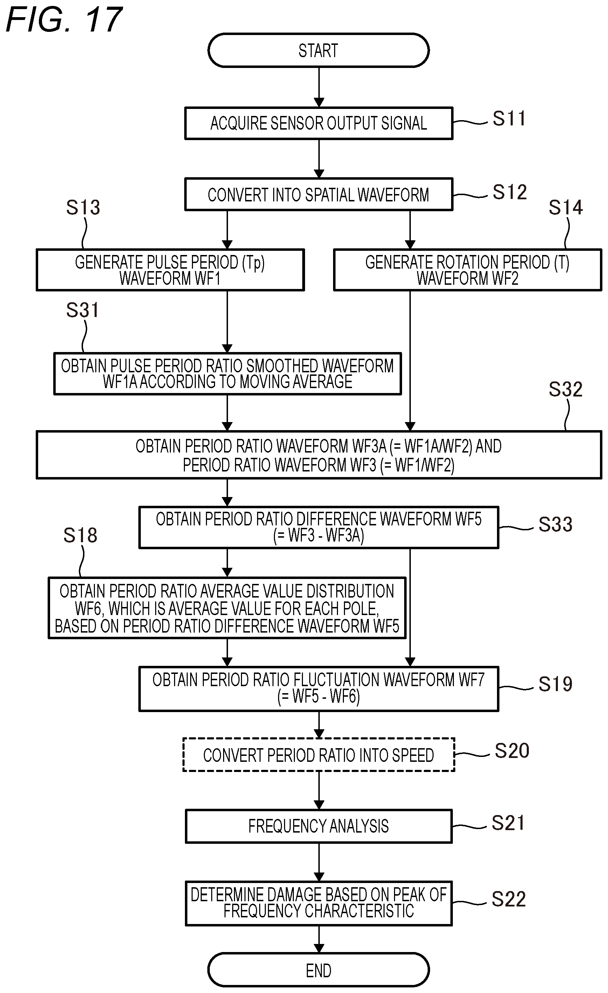

FIG. 17 is a flowchart illustrating another procedure 1 of the damage determination in which the procedure of the flowchart shown in FIG. 8 is partially changed. In the other procedure shown in FIG. 17, the steps S11 to S14 and S18 to S22 described above are used in common, and the pulse period (Tp) waveform WF1 generated in S13 is smoothed before being converted into a period ratio to remove an error due to the rotation unevenness.

That is, a pulse period smoothed waveform WF1A is obtained by smoothing the pulse period waveform WF1 generated in S13 by the method such as moving average described above (S31). Then, the pulse period smoothed waveform WF1A is divided by the rotation period waveform WF2 generated in S14 to obtain a period ratio waveform WF3A (= WF1A/WF2) which is the period ratio described above and the period ratio waveform WF3 obtained by dividing the pulse period (Tp) waveform WF1 by the rotation period (T) waveform WF2 in the same manner as described above (S32). Further, the period ratio difference waveform WF5 (= WF3 - WF3A) which is a difference between the period ratio waveform WF3 and the period ratio waveform WF3A is obtained (S33). The subsequent processing is the same as described above.

This procedure is the same as the flowchart shown in FIG. 8 except that the smoothing processing is performed before the period ratio is obtained. As in this procedure, the timing at which the period ratio is made dimensionless can be any timing, and substantially the same result can be obtained at any timing.

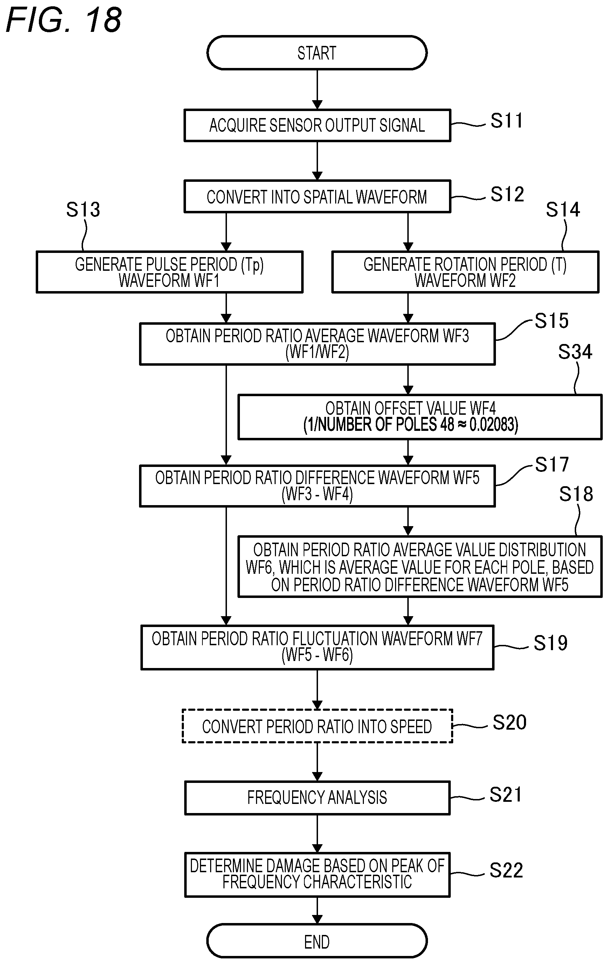

FIG. 18 is a flowchart illustrating another procedure 2 of the damage determination in which the procedure of the flowchart shown in FIG. 8 is partially changed. In the other procedure 2 shown in FIG. 18, instead of the period ratio smoothed waveform WF4 obtained in S16 described above, a constant offset value is set as WF4 (S36). The WF4 serving as the offset value may be, for example, 1/number of poles n (n = 48) ≈ 0.02083.

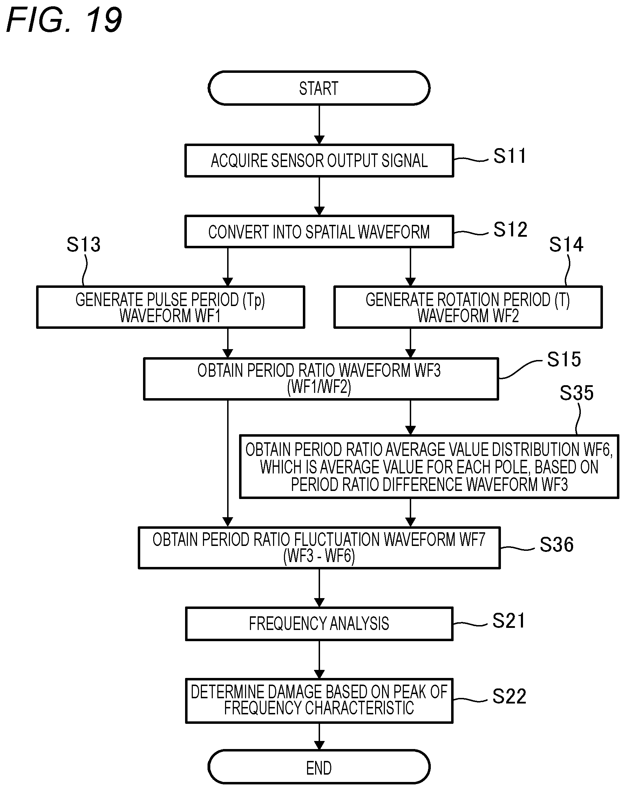

FIG. 19 is a flowchart illustrating another procedure 3 of the damage determination in which the procedure of the flowchart shown in FIG. 8 is partially changed. In the other procedure 3 shown in FIG. 19, the period ratio smoothed waveform WF4 obtained in S16 and the period ratio difference waveform WF5 obtained in S17 described above are omitted, and the period ratio average value distribution WF6 which is an average value of the period ratio for each pole is obtained based on the period ratio waveform WF3 obtained in S15 (S35). Then, the period ratio fluctuation waveform WF7 is obtained by subtracting the value of the period ratio average value distribution WF6 from the period ratio waveform WF3 (S36).

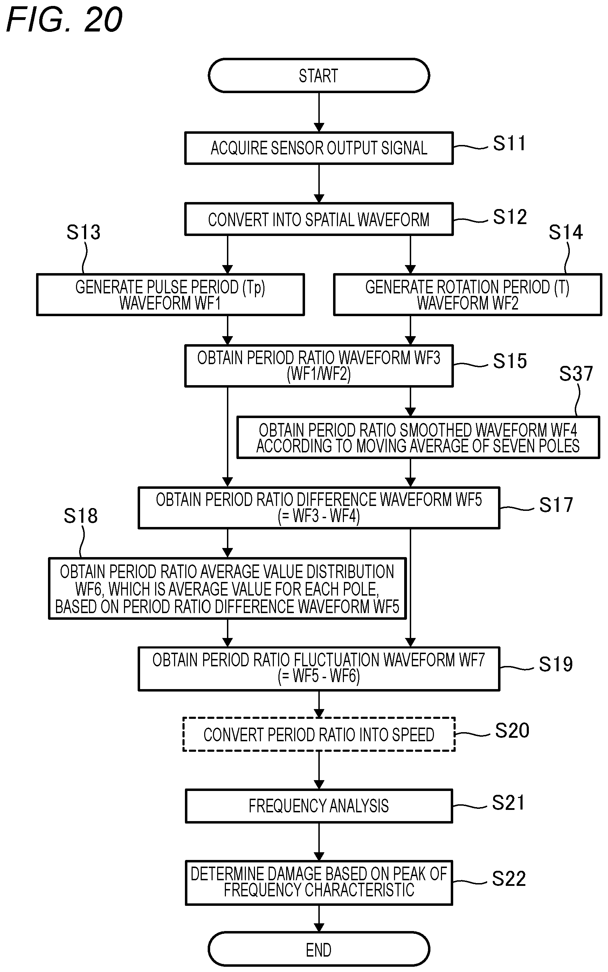

FIG. 20 is a flowchart illustrating another procedure 4 of the damage determination in which the procedure of the flowchart shown in FIG. 8 is partially changed. In the other procedure 4 shown in FIG. 20, the period ratio smoothed waveform WF4 obtained in S16 described above is subjected to seven term moving average processing in which the data for seven poles of the period ratio waveform WF3 is taken as a moving average to obtain the period ratio smoothed waveform WF4 (S37). By calculating the moving average of terms corresponding to a part of the total number (n = 48) of poles of the magnetic encoder, an appropriate noise reduction effect can be attained. The number of terms of the moving average may be set to the number of poles, for example, 1/5 to 1/10 of the total number of poles in the magnetic encoder.

### <Second Embodiment>

### (Configuration of Damage Detection System)

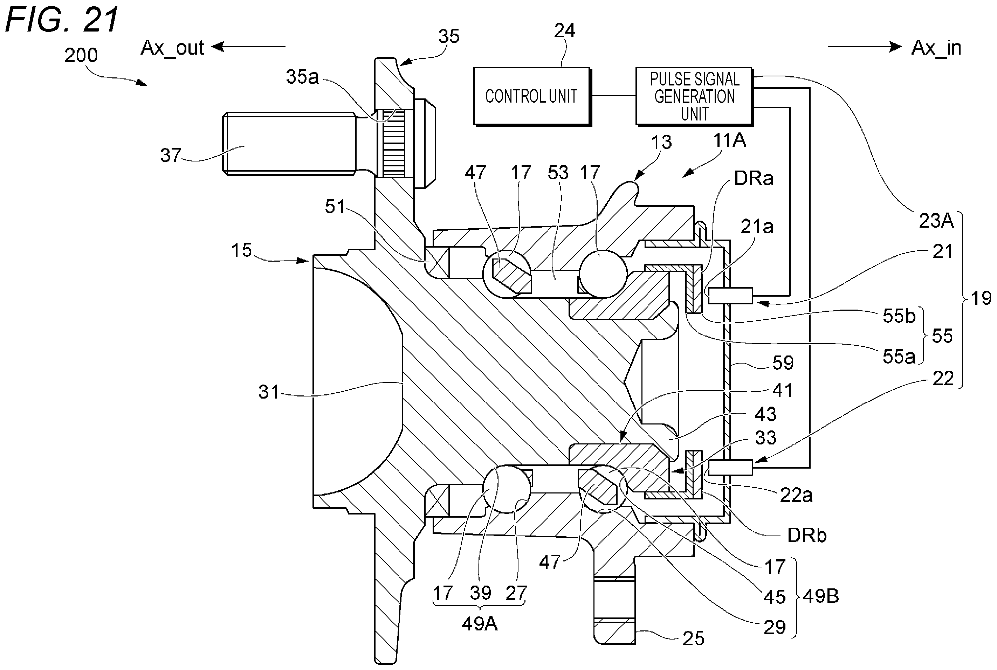

FIG. 21 is a schematic configuration diagram of a bearing damage detection system 200 for a hub unit bearing according to a second embodiment. In FIG. 21, the hub 15 and sensors 21 and 22 of a hub unit bearing 11A are shown in horizontal cross section. The first embodiment shown in FIG. 1 has a configuration in which the rotation of the hub shaft 31 is detected by one sensor 21, but the second embodiment has the same configuration of the hub unit bearing as the first configuration example except that the rotation is detected by the two sensors 21 and 22.

When there is one sensor, an error due to displacement of the raceway ring caused by a change in the position of the rolling element is superimposed on an output signal from the sensor. Therefore, the fluctuation of each waveform described above includes displacement due to a change in the position of the rolling element, and a peak due to the influence thereof also appears in the frequency characteristic.

On the other hand, the bearing damage detection system 200 shown in FIG. 21 includes the sensor (the first rotation sensor) 21 that detects rotation at one end portion in the horizontal direction and the sensor (the second rotation sensor) 22 that detects rotation at the other end portion in the horizontal direction at the intermediate position of the hub unit bearing 11A in the vertical direction. Data processing is executed using a phase difference between output signals from the sensors 21 and 22. The sensor 22 is provided with a detection surface 22a thereof facing the magnetic encoder 55. In the sensor output signals from the two sensors 21 and 22 provided at positions facing each other in the horizontal direction, the delay or advance of the phase due to the displacement of the rolling wheel accompanying the change in the position of the rolling element appears in opposite directions. Therefore, by using the difference signal between the sensor output signals from the two sensors 21 and 22, the delay or advance of the phase described above is canceled, and the displacement in the upper-lower direction is calculated. When the frequency characteristic is obtained by executing data processing based on the difference signal, noise is reduced in the frequency characteristic. In the case in which the bearing is damaged, a peak generated in the period calculated based on the rolling element pitch and the orbital speed of the rolling element appears clearly, and in the case of inner ring damage, a peak generated in the period calculated based on the rotation speed appears clearly. The detection accuracy of damage is improved.

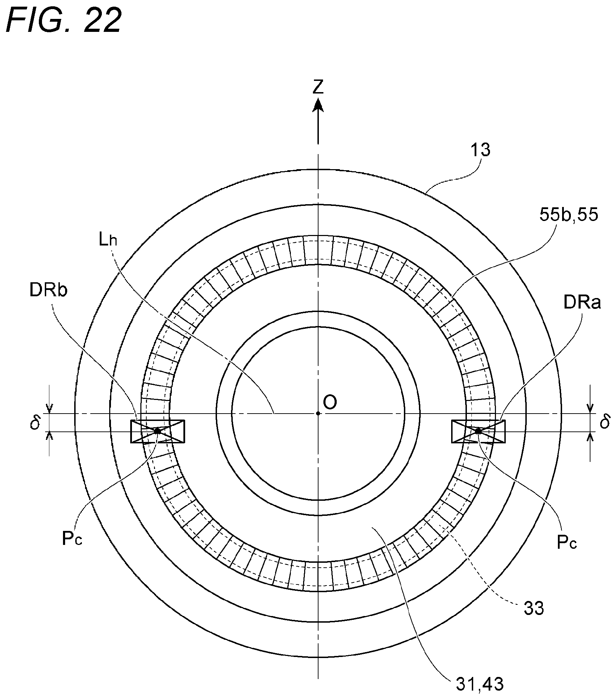

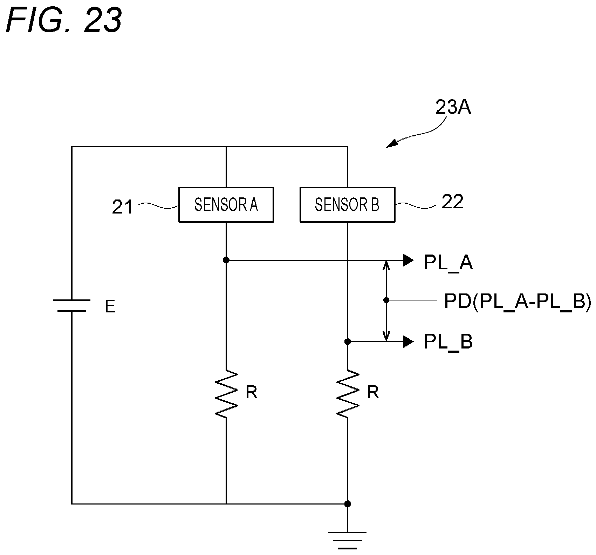

FIG. 22 is a diagram schematically illustrating an arrangement relation between the inner ring 33, the outer ring 13, and the magnetic encoder 55 of the hub unit bearing 11A, and a detection region DRa of the sensor 21 and a detection region DRb of the sensor 22. In FIG. 23, the acting direction (generally, the vertical direction Z which is the direction of gravity) of the radial load applied from the inner ring 33 to the outer ring 13 is shown as the upper-lower direction.

It is preferable that center positions Pc of the detection region DRa of the sensor 21 and the detection region DRb of the sensor 22 are both set at a position shifted a distance δ downward from a horizontal line Lh passing through a center axis O of the hub unit bearing 11A. In this case, as will be described in detail later, it is easy to detect the deviation due to the phase difference signal. The center positions Pc of the detection regions DRa and DRb may be provided on the horizontal line Lh described above.

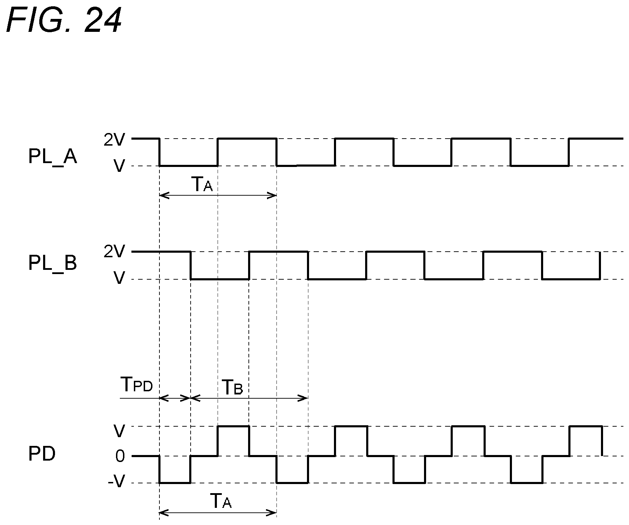

FIG. 24 is a schematic circuit diagram of a pulse signal generation unit 23A. In this case, the pulse signal generation unit 23A sets, for example, the output signal from the sensor 21 (the sensor A) as a pulse signal PL_A and the output signal from the sensor 22 (the sensor B) as a pulse signal PL_B. A difference signal between the pulse signal A and the pulse signal B is output as a phase difference signal PD (= PL_A - PL_B).

FIG. 24 is a diagram illustrating waveform examples of the pulse signals PL_A and PL_B and the phase difference signal PD. A pulse period of the pulse signal PL_A is T_{A}, a pulse period of the pulse signal PL_B is T_{B}, and a phase difference between the pulse signals PL_A and PL_B is T_{PD}. For example, when the voltages of the pulse signals PL_A and PL_B are +V and +2V, the phase difference signal PD has a waveform that changes in a range of +V to -V, and a period in which the voltage is -V corresponds to the phase difference T_{PD}.

The pulse signals PL_A and PL_B and the phase difference signal PD described above change due to the damage to the hub unit bearing 11A.

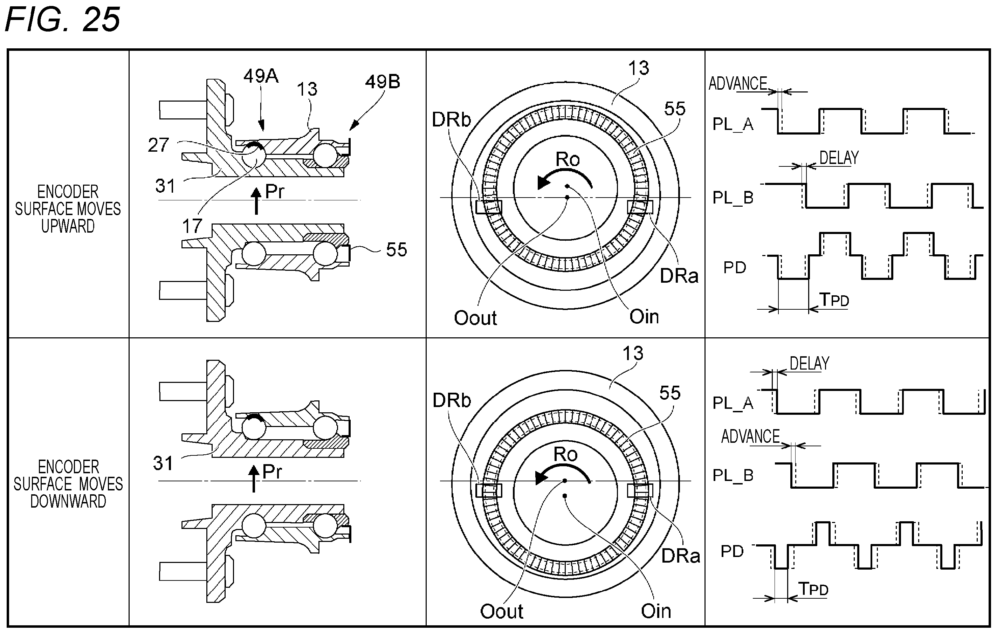

FIG. 25 is a diagram showing the influence of the relative displacement of the inner and outer rings due to the peeling of the outer ring raceway on the sensor output. Here, similarly to the case shown in FIG. 6, a state is shown in which the hub shaft 31 moves up and down due to peeling, indentation, or the like of the outer ring raceway 27 of the bearing portion 49A in the outer row.

It is assumed that the radial load Pr (the preload) directed upward in the vertical direction is applied from the hub shaft 31 to the outer ring 13 in the bearing portion 49A. Then, when the rolling element 17 in the floating state in the defect region where the peeling occurs in the outer ring raceway 27 rides on the region where the peeling does not occur from the end portion of the defect region, the impact load described above larger than the radial load Pr is applied to the hub shaft 31, and the hub shaft 31 is displaced downward. Thereafter, when the hub shaft 31 further rotates and an impact load is generated in the opposite direction, the hub shaft 31 is displaced upward. Then, the magnetic encoder 55 fixed to the hub shaft 31 is displaced in a direction of moving downward and then upward according to the displacement of the hub shaft 31. Even when the preload described above is not applied to the hub shaft 31, the behavior of the magnetic encoder 55 is the same as described above, and the magnetic encoder 55 moves downward and upward according to the displacement of the hub shaft 31.

That is, in the floating state, the hub shaft 31 is displaced upward, and a center Oᵢₙ of the hub shaft 31 is displaced upward with respect to a center Oₒᵤₜ of the outer ring 13. At this time, in the pulse signals PL_A and PL_B detected from the detection regions DRa and DRb, phase advance and delay from the neutral position occur. Specifically, since the hub shaft 31 is displaced upward in the same direction as a rotation direction Ro in the detection region DRa, the phase of the pulse signal PL_A advances. In the detection region DRb, since the hub shaft 31 is displaced upward in the direction opposite to the rotation direction Ro, the phase of the pulse signal PL_B is delayed. As a result, the phase difference signal PD which is a difference signal between the pulse signal PL_B and the pulse signal PL_A has a period of the phase difference T_{PD}.

On the other hand, when the hub shaft 31 is displaced downward, the hub shaft 31 is displaced downward in the direction opposite to the rotation direction Ro in the detection region DRa. Therefore, the phase of the pulse signal PL_A is delayed. In the detection region DRb, since the hub shaft 31 is displaced downward in the same direction as the rotation direction Ro, the phase of the pulse signal PL_B advances. As a result, the phase difference signal PD, which is the difference signal between the pulse signal PL_B and the pulse signal PL_A, has the period of the phase difference T_{PD} different from that in the case in which the hub shaft 31 is displaced upward.

That is, since the value of the phase difference T_{PD} of the phase difference signal PD changes according to the amount of movement of the hub shaft 31 in the upper-lower direction, the relative displacement between the inner ring 33 and the outer ring 13 can be calculated based on the phase difference between the pulse signals from the two sensors 21 and 22. The phase difference T_{PD} changes depending on the positions of the detection regions DRa and DRb, and the phase difference T_{PD} appearing in the phase difference signal PD can be easily detected by obtaining the pulse length of the specific pulse. As described above, by setting the center positions Pc of the detection regions DRa and DRb to a position shifted downward from the horizontal line Lh passing through the center axis O of the hub unit bearing 11A, the pulse length of the specific pulse described above is prevented from becoming 0 and undetectable.

For the phase difference and the pulse period described above, the phase difference and the pulse period are not limited to being calculated based on the waveforms obtained by the pulse signal generation unit 23A subtracting the pulse signals PL_A and PL_B in real time, and may be calculated based on the pulse signals PL_A and PL_B after the waveforms of the pulse signals are individually monitored.

The above description schematically shows the behavior of the signal change, and the state of the signal change close to the actual signal will be described below.

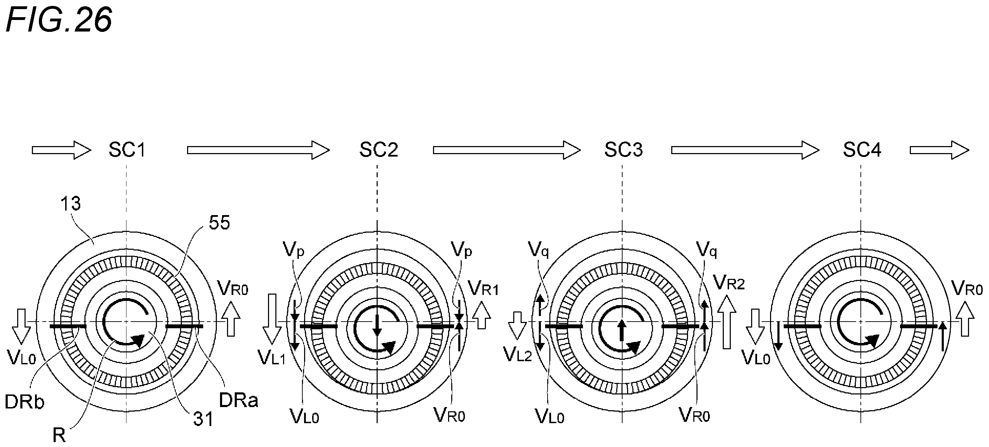

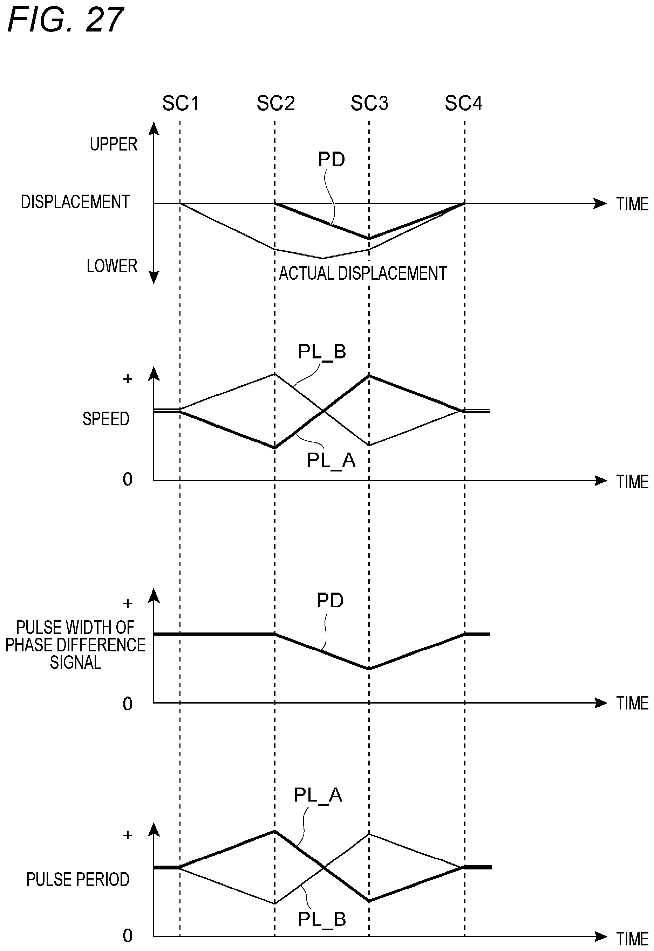

FIG. 26 is a diagram illustrating the relation between the displacement of the encoder and the phase difference of the detected pulse signal. FIG. 27 is a diagram illustrating an example of changes in the pulse signals PL_A and PL_B and the phase difference signal PD. FIGS. 26 and 27 show the state of displacement when the peeling occurs in the outer ring raceway shown in FIG. 6 described above in the order of sections SC1, SC2, SC3, and SC4 in time series. In SC1 in the initial state, the speeds (VR₀ and VL₀: also referred to as relative speeds) detected in the detection region DRa and the detection region DRb shown in FIG. 26 are equal to each other. Then, in SC2 in which the hub shaft 31 rotates, the rolling element reaches the end portion of the defect region of the outer ring raceway, and the rolling element enters between the outer ring raceway and the inner ring raceway without peeling again. At this time, as described with reference to FIG. 6 in the case of the single sensor described above, the hub shaft 31 is displaced downward. Therefore, the speed (VR₁) detected in the detection region DRa decreases, and the speed (VL₁) detected in the detection region DRb increases.

In SC3 in which the hub shaft 31 further rotates and the rolling element originally transitions to the rolling state between the outer ring raceway and the inner ring raceway, the speed (VR₂) detected in the detection region DRa increases and the speed (VL₁) detected in the detection region DRb decreases. Then, in SC4 in which the hub shaft 31 further rotates, the state returns to the same state as SC1 in the initial state.

The pulse signals PL_A and PL_B and the phase difference signal PD (= PL_A - PL_B) in the sections SC1, SC2, SC3, and SC4 generate distributions of the speed, the pulse width of the phase difference signal, and the pulse period shown in FIG. 27. For example, the displacement amount in the upper-lower direction is obtained based on the pulse width of the phase difference signal, and the displacement speed is obtained based on the pulse period of the pulse signals PL_A and PL_B. Although the displacement of the hub shaft 31 actually occurs between SC1 and SC4, the displacement is detected between SC2 and SC4.

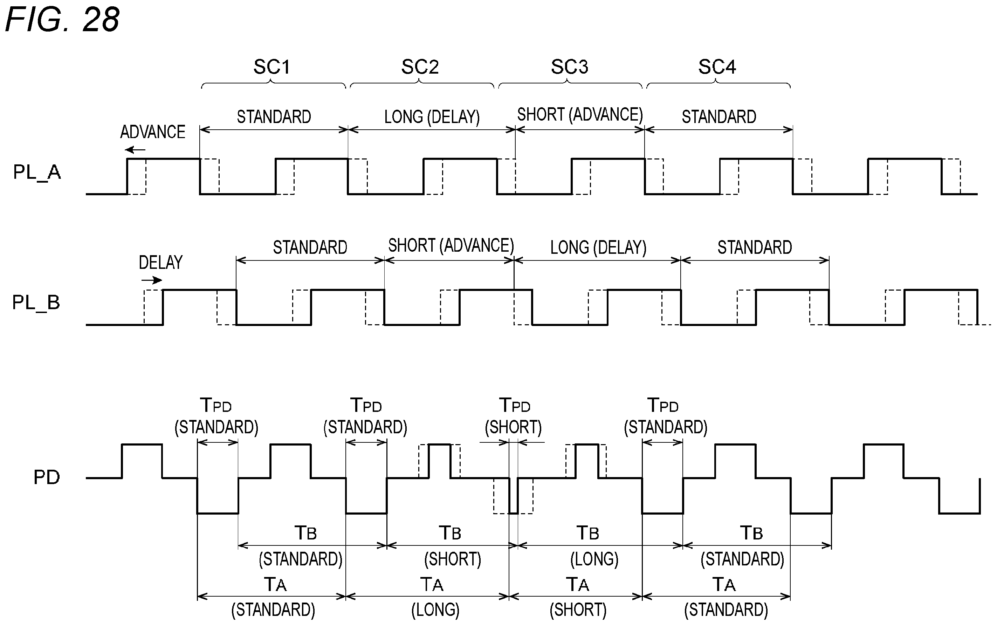

FIG. 28 is a diagram schematically illustrating specific waveforms of the pulse signals PL_A and PL_B and the phase difference signal PD. The pulse signals PL_A and PL_B have a phase delay and a phase advance corresponding to the height positions of the detection regions DRa and DRb. In the section SC2 described above, the period of the pulse signal PL_A becomes longer, and the period of the pulse signal PL_B becomes shorter. In the section SC3, the period of the pulse signal PL_A becomes shorter, and the period of the pulse signal PL_B becomes longer. Therefore, the phase difference T_{PD} appearing in the phase difference signal PD between the sections SC3 and SC4 is shorter than the other sections. The change in the phase difference T_{PD} is quantitatively obtained at the time of frequency analysis of a waveform to be described later, and is used for determination of damage.

### (Procedure of Damage Determination)

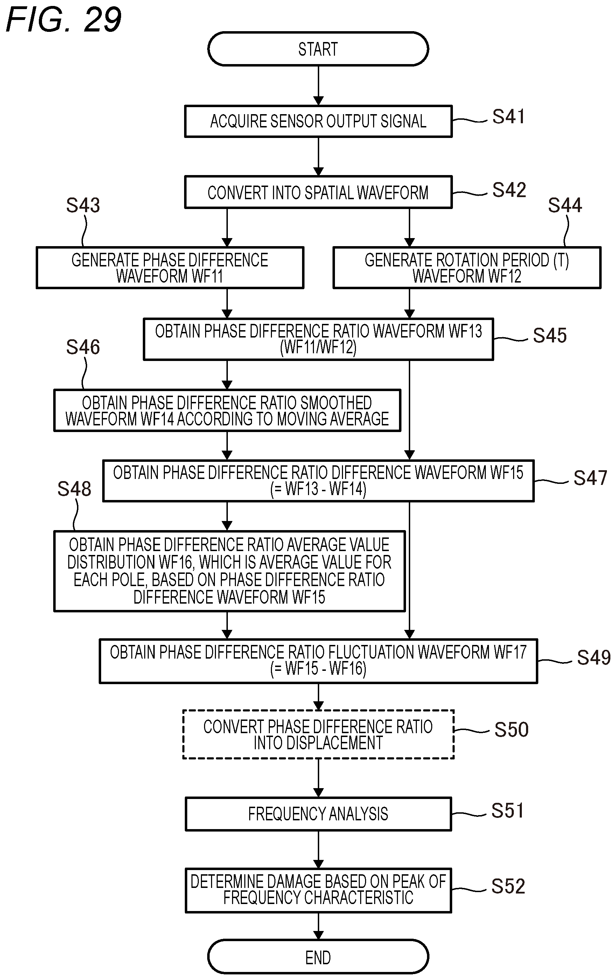

FIG. 29 is a flowchart showing a procedure for determining damage to the hub unit bearing 11A using the two sensors 21 and 22 described above. The following procedures are performed based on commands from the control unit 24 shown in FIG. 21.

First, the rotation of the rotatably driven hub unit bearing 11A is detected by the sensors 21 and 22, and sensor output signals that are rotation signals output from the sensors 21 and 22 are acquired (S41). Each of the sensor output signals is converted into a respective one of the pulse signals PL_A and PL_B by the pulse signal generation unit 23.

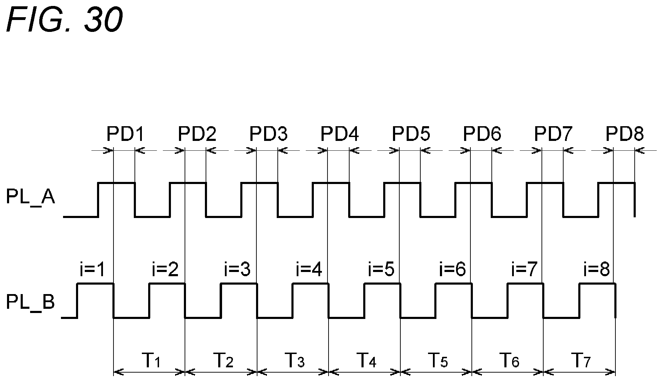

FIG. 30 is a diagram illustrating the waveforms of the pulse signal PL_A and the pulse signal PL_B. The control unit 24 obtains a pulse period Tᵢ of the pulse signal PL_B and a phase difference PDᵢ (i is an integer representing the order of pulses) between the pulse signal PL_B and the pulse signal PL_A. The phase difference PDᵢ may be the phase difference signal PD generated by the pulse signal generation unit 23A shown in FIG. 23, or may be obtained by individually converting the pulse signals PL_A and PL_B into a phase difference through AD conversion.

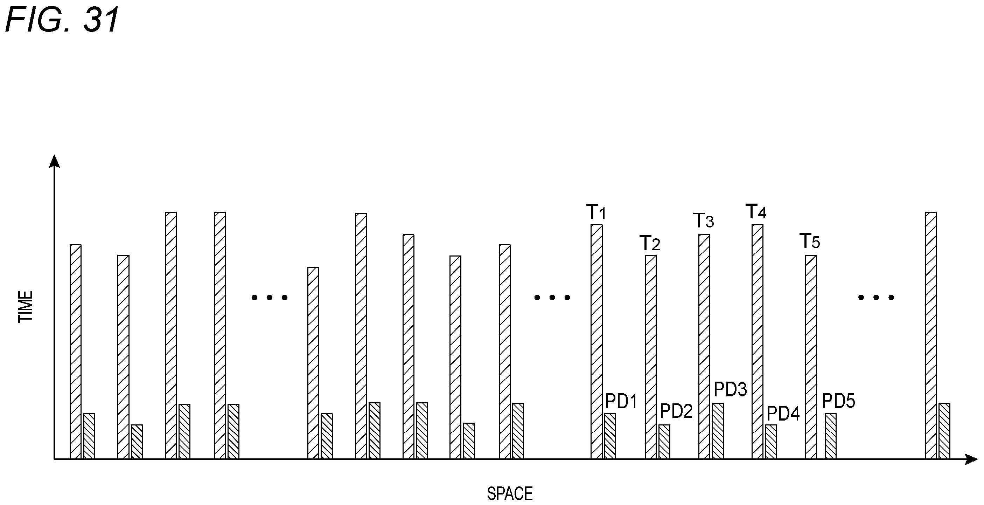

FIG. 31 is a diagram illustrating changes in the period Tᵢ and the phase difference PDᵢ, where the horizontal axis is a space representing the order of pulses of the pulse signal PL_B and the vertical axis is time. In this procedure, a spatial waveform of the phase difference PDᵢ is obtained (S42), and damage is determined based on the waveform. That is, data processing is executed using the phase difference between the sensor output signals from the two sensors 21 and 22 instead of the sensor output signal from one sensor 21. The subsequent procedure is basically the same as the processing content in the first embodiment except that the "pulse period" described above is changed to the "phase difference", and thus the detailed description of the procedures will be omitted.

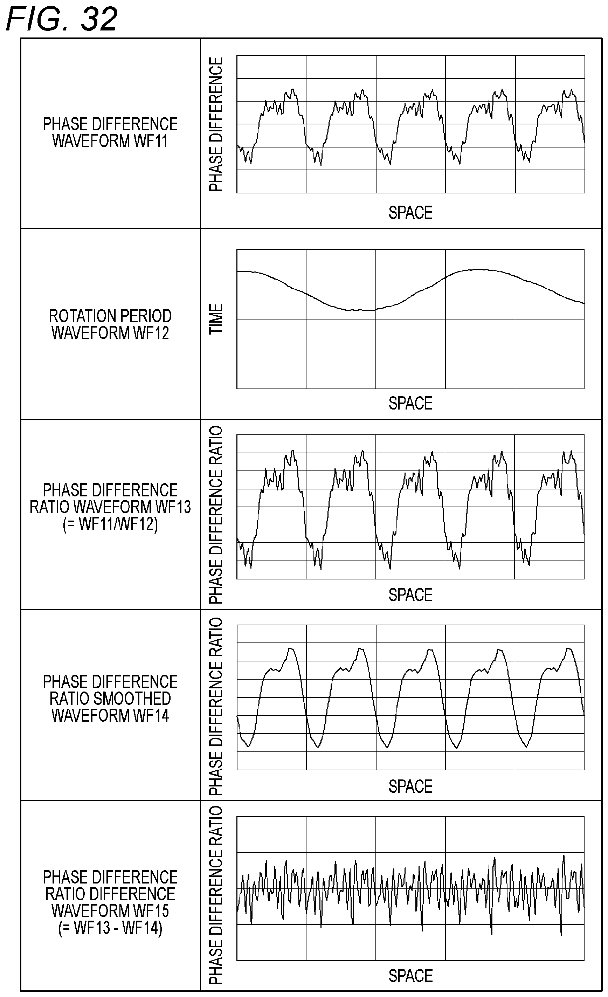

FIG. 32 is a diagram illustrating an example of a waveform until a rotation fluctuation signal is generated by extracting the rotation fluctuation of the hub shaft 31 from the pulse output signal. A phase difference waveform WF11 indicates the phase difference PDᵢ in FIG. 31 (S43), and a rotation period waveform WF12 is a waveform obtained by obtaining, for each pulse of the pulse signal PL_B (or PL_A), the transition of the period T of one rotation around the pulse, as shown in FIG. 23 described above (S44).

Next, a phase difference ratio waveform WF13 (= WF11/WF12) is obtained by dividing the phase difference waveform WF11 by the rotation period waveform WF12 (S45). In the phase difference ratio waveform WF13, the influence of the rotation speed error is removed.

Then, the phase difference ratio waveform WF13 is smoothed in the same manner as described above to obtain a phase difference ratio smoothed waveform WF14 (S46), and a phase difference ratio difference waveform WF15 (= WF13 - WF14) representing a difference between the phase difference ratio waveform WF13 and the phase difference ratio smoothed waveform WF14 is obtained (S47). Depending on the condition, the phase difference ratio smoothed waveform WF14 may not be subtracted from the phase difference ratio waveform WF13, and the phase difference ratio waveform WF13 may be directly used as the phase difference ratio difference waveform WF15.

Next, a phase difference ratio average value distribution WF16 which is an average value for each pole of the magnetic encoder is obtained based on the phase difference ratio difference waveform WF15 (S48).

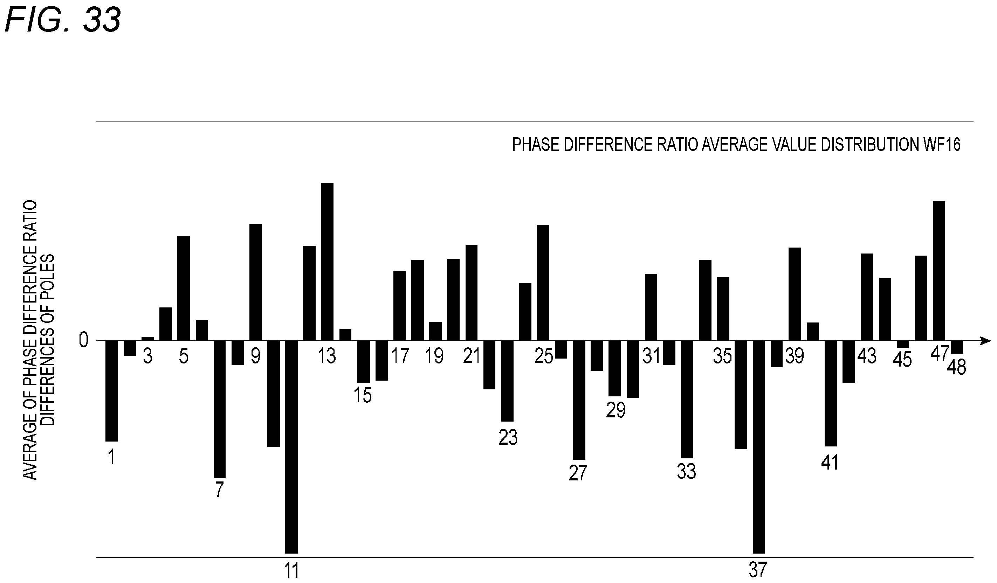

FIG. 33 is a diagram illustrating an example of the phase difference ratio average value distribution WF16. The deviation of the vertical axis from the 0 level in the phase difference ratio average value waveform WF16 represents the magnetization error of the magnetic encoder. In FIG. 33, a line (not shown) connecting the average values for each pole of the phase difference ratio average value distribution is the phase difference ratio average value waveform.

Next, a phase difference ratio fluctuation waveform WF17 representing a difference between the phase difference ratio difference waveform WF15 and the phase difference ratio average value waveform WF16 described above is obtained (S19). The phase difference ratio fluctuation waveform WF17 is obtained by subtracting the value for each pole indicated by the phase difference ratio average value waveform WF16 from the value for each pole of the phase difference ratio difference waveform WF15 for the corresponding poles. Hereinafter, the phase difference ratio difference waveform WF15 is also referred to as a "detection waveform", the phase difference ratio average value waveform WF16 is also referred to as a "reference waveform", and the phase difference ratio fluctuation waveform WF17 is also referred to as a "rotation fluctuation waveform".

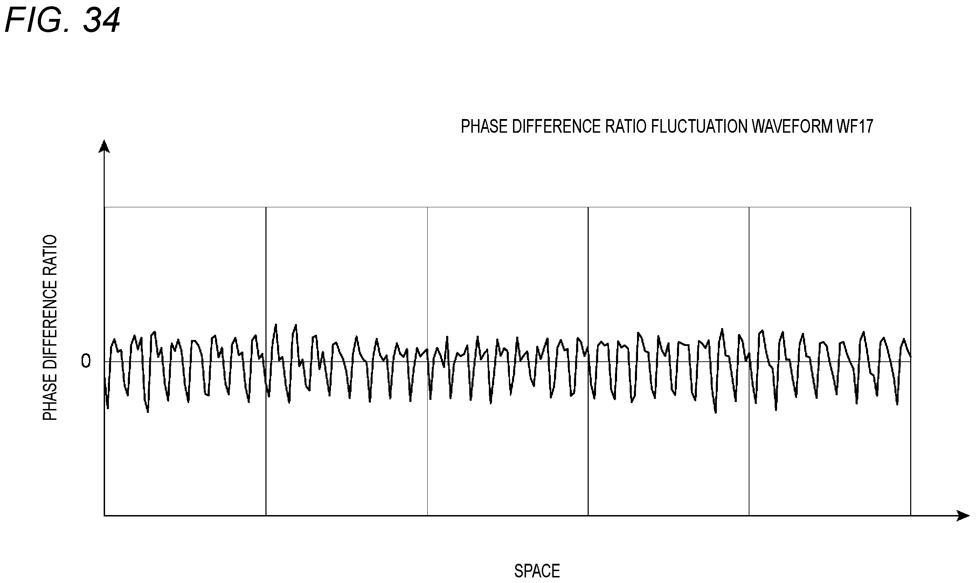

FIG. 34 is a diagram schematically showing the phase difference ratio fluctuation waveform WF17. In the phase difference ratio fluctuation waveform WF17, the magnetization error of the magnetic encoder 55 is removed. That is, since the rotation speed change, the rotation unevenness, and the magnetization error are removed from the phase difference ratio fluctuation waveform WF17, it can be said that the fluctuation appearing here is caused by the displacement due to the change in the rolling element position and the displacement due to the damage when the bearing raceway surface is damaged.

The phase difference ratio fluctuation waveform WF17 may be a waveform in which the vertical axis is converted from the period ratio to the displacement fluctuation by geometric calculation (S50). In this case, it is easy to intuitively grasp the fluctuation level as the magnitude of the displacement.

Next, the phase difference ratio fluctuation waveform WF17 is subjected to frequency analysis (S51).

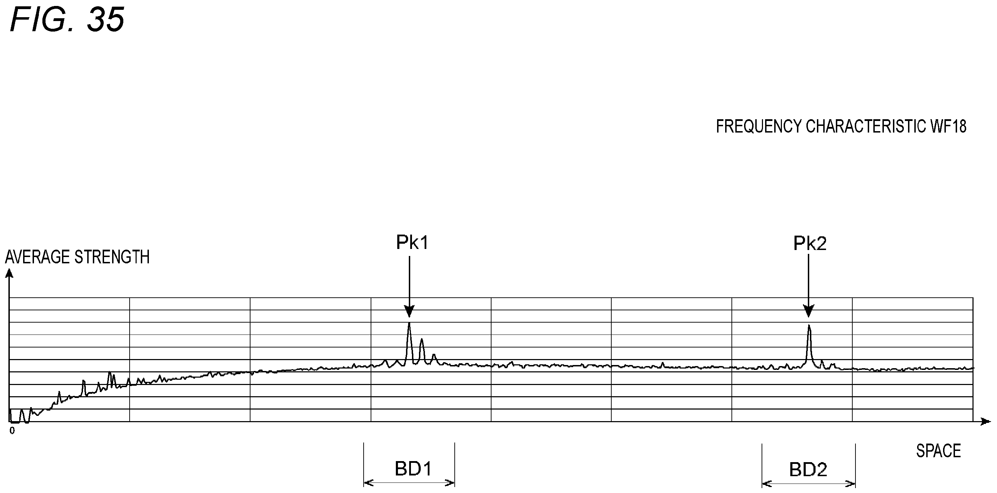

FIG. 35 is a diagram illustrating an example of a frequency characteristic WF18 obtained by executing FFT processing on the phase difference ratio fluctuation waveform WF17. The phase difference ratio fluctuation waveform WF17 includes a displacement fluctuation due to a change in the rolling element position, and a displacement fluctuation due to damage to the bearing when the bearing is damaged. Therefore, in the frequency characteristic WF18, a peak (primary to several orders) of the spatial frequency calculated based on the orbital speed of the ball, a peak generated in a period calculated based on the ball pitch and the orbital speed of the ball when the bearing is damaged, and a peak generated in a period calculated based on the rotation speed when the outer ring is damaged appear. When the peak caused by such bearing damage is equal to or greater than a threshold value, it is determined that the bearing is damaged. Even when the vertical axis of the phase difference ratio fluctuation waveform WF17 is converted into the displacement fluctuation, the same frequency characteristic WF18 is obtained.

In the frequency characteristic WF18 shown in FIG. 35, main peaks caused by bearing damage appear as, for example, the defect primary peak Pk1 and the defect secondary peak Pk2. Then, as described above, the bearing damage is determined according to the total value of the peak intensities in the set spatial bands BD1 and BD2.

In addition to the procedure described above, the bearing damage may be determined by another procedure to be described below.

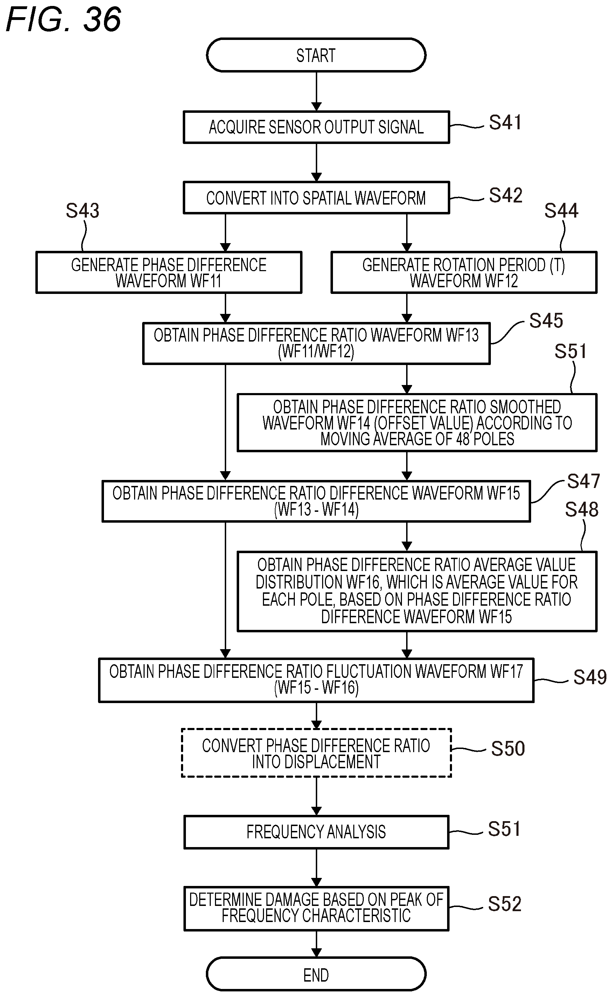

FIG. 36 is a flowchart illustrating another procedure 1 of the damage determination in which the procedure of the flowchart shown in FIG. 29 is partially changed. In the other procedure 1 shown in FIG. 36, the phase difference ratio waveform WF13 obtained in S45 described above is subjected to 48 term moving average processing of moving average data for all poles (48 poles) of the magnetic encoder for the phase difference ratio waveform WF13 to obtain the phase difference ratio smoothed waveform WF14. The phase difference ratio smoothed waveform WF14 is a substantially flat waveform and has a substantially constant offset value as a whole. In S47, a difference between the phase difference ratio waveform WF13 and the phase difference ratio smoothed waveform WF14 is obtained as the phase difference ratio difference waveform WF15.

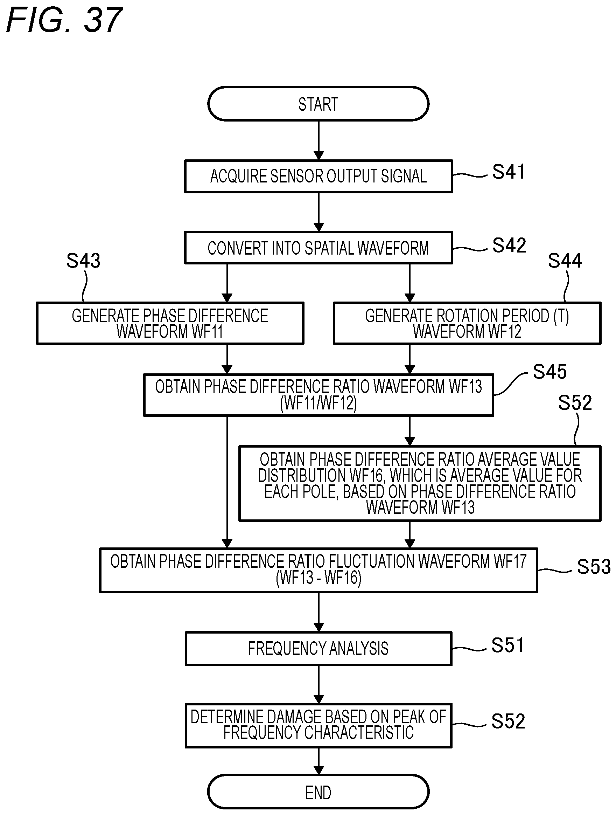

FIG. 37 is a flowchart illustrating another procedure 2 of the damage determination in which the procedure of the flowchart shown in FIG. 29 is partially changed. In the other procedure 2 shown in FIG. 37, the phase difference ratio waveform WF13 obtained in S45 described above is averaged for each pole of the magnetic encoder for the phase difference ratio waveform WF13 to obtain the phase difference ratio average value distribution WF16 (S52). Then, the phase difference ratio fluctuation waveform WF17 is obtained by subtracting the value of the phase difference ratio average value distribution WF16 from the phase difference ratio waveform WF13 (S53). In S51, the phase difference ratio fluctuation waveform WF17 is subjected to frequency analysis.

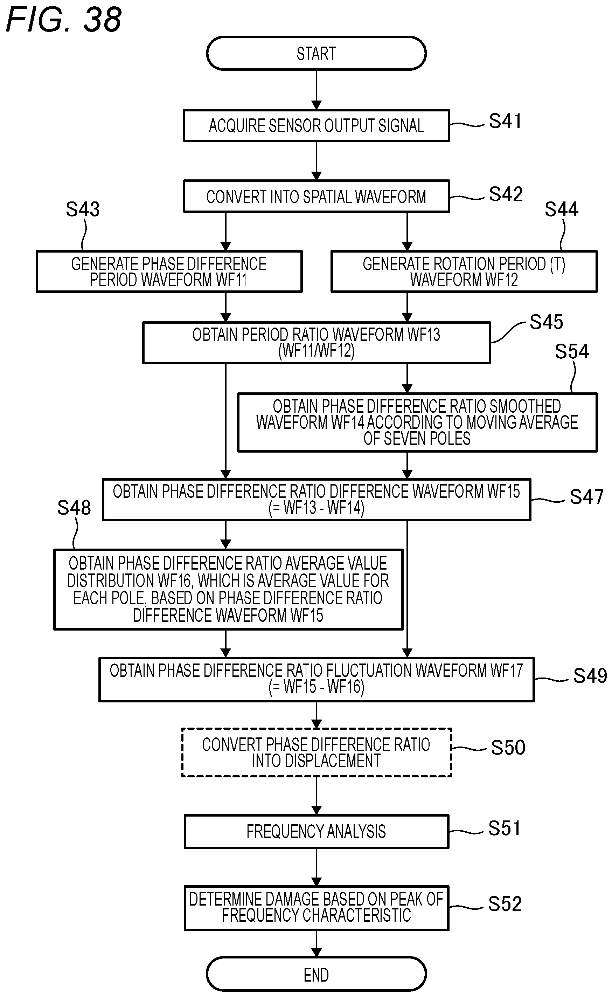

FIG. 38 is a flowchart illustrating another procedure 3 of the damage determination in which the procedure of the flowchart shown in FIG. 29 is partially changed. In the other procedure 3 shown in FIG. 38, the phase difference ratio waveform WF13 obtained in S45 described above is subjected to seven term moving average processing of moving average data for seven poles of the phase difference ratio waveform WF13 to obtain the phase difference ratio smoothed waveform WF14 (S54). By calculating the moving average of terms corresponding to a part of the total number (n = 48) of poles of the magnetic encoder, an appropriate noise reduction effect can be attained. The number of terms of the moving average may be set to the number of poles, for example, 1/5 to 1/10 of the total number of poles in the magnetic encoder.

### <Time Sequence of Control>

Next, a time sequence of control in the embodiments described above will be described.

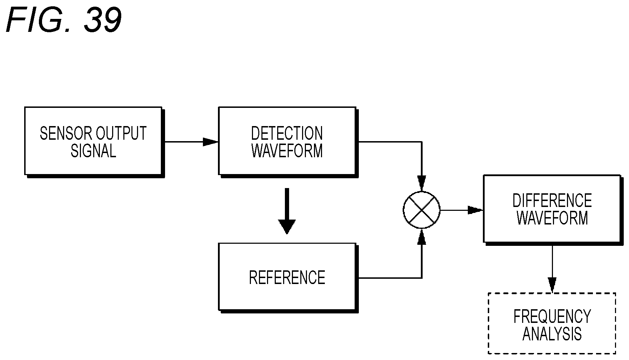

FIG. 39 is a control block diagram until a difference waveform is obtained based on the detected pulse signal to obtain a rotation fluctuation waveform. In this processing, the control unit 24 obtains a detection waveform K described above based on the output signal from the sensors (the sensor 21 in FIG. 1, the sensors 21 and 22 in FIG. 21), and stores a composite average waveform C obtained by integrating and averaging the obtained detection waveform K for each rotation angle (pole) in the storage device as a reference waveform. Then, the detection waveform K is obtained based on an output signal newly output from the sensor, and a difference waveform is obtained by subtracting the value of the reference waveform stored in the storage device from the new detection waveform K for each rotation angle. The obtained difference waveform (the rotation fluctuation waveform) is a waveform from which an unnecessary fluctuation component is removed, and the frequency characteristic from which an unnecessary peak is removed is obtained by frequency analysis.

In this control, the reference waveform obtained based on the detection waveform K based on the output signal from the sensor is used to execute subtract processing on the detection waveform K itself. That is, a reference waveform is generated based on the detection waveform K including a fluctuation component caused by a defect, the original detection waveform K is processed using the obtained reference waveform, and an unnecessary fluctuation component is removed from the detection waveform K in real time. For example, when measurement data is processed using a reference waveform, in a case in which a reference waveform based on past measurement data, calculation, or the like is prepared in advance and processing is executed using the prepared reference waveform, the reference waveform does not necessarily match the timing at which the measurement data is actually acquired. Therefore, a processing result may be distorted.

On the other hand, in this control, the reference waveform used for the subtraction processing of the detection waveform K is generated based on a pulse signal in which the detection waveform K is obtained or a pulse signal continuous to the pulse signal. That is, the pulse signal used for generating the reference waveform or the rotation of the rolling bearing when the pulse signal is output is continued as it is, and the reference waveform is obtained using the pulse signal continuously output following the pulse signal described above. Therefore, since the measurement data to be evaluated and the reference waveform are information at timings that can be regarded as simultaneous or substantially simultaneous in time series, there is almost no change in the rotation condition, and the incompatibility described above does not occur.

Hereinafter, a specific example of the control for executing the damage determination of the rolling bearing will be described.

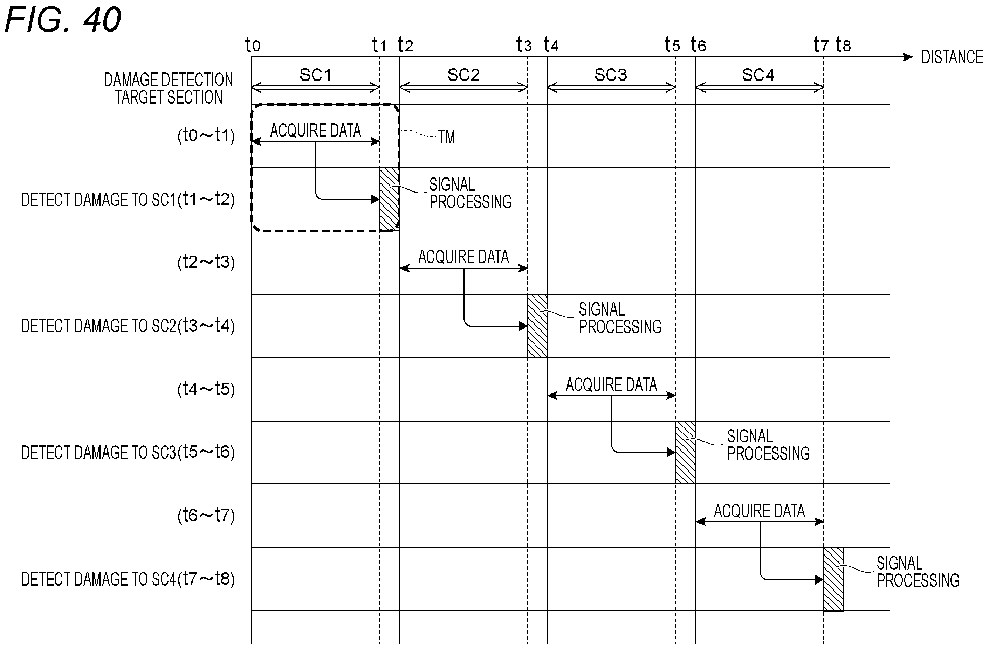

FIG. 40 is a diagram showing a time chart 1 until the damage determination of the rolling bearing is executed based on the detection waveform K. In the time chart in FIG. 40, the horizontal axis represents the elapsed time, and the processing content for each elapsed time is shown along the vertical axis. In this control, damage detection target sections SC1, SC2, SC3, SC4, ··· in which damage is detected are intermittently and sequentially set. First, the output signal from the sensor is acquired during elapsed times t₀ to t₁. During a next elapsed period t₁ to t₂, the detection waveform K is generated, a reference waveform is generated based on the detection waveform K, a difference waveform (a rotation fluctuation waveform) is obtained by subtracting the reference waveform from the detection waveform K, and the rotation fluctuation waveform is subjected to frequency analysis by FFT or the like to execute the damage determination. In a period (a period surrounded by a broken line TM) from t₀ to t₂ described above, the damage determination of the damage detection target section SC1 in the elapsed times t₀ to t₁ is completed. Thereafter, the same processing is repeatedly executed sequentially for SC2, SC3, SC4, ···.

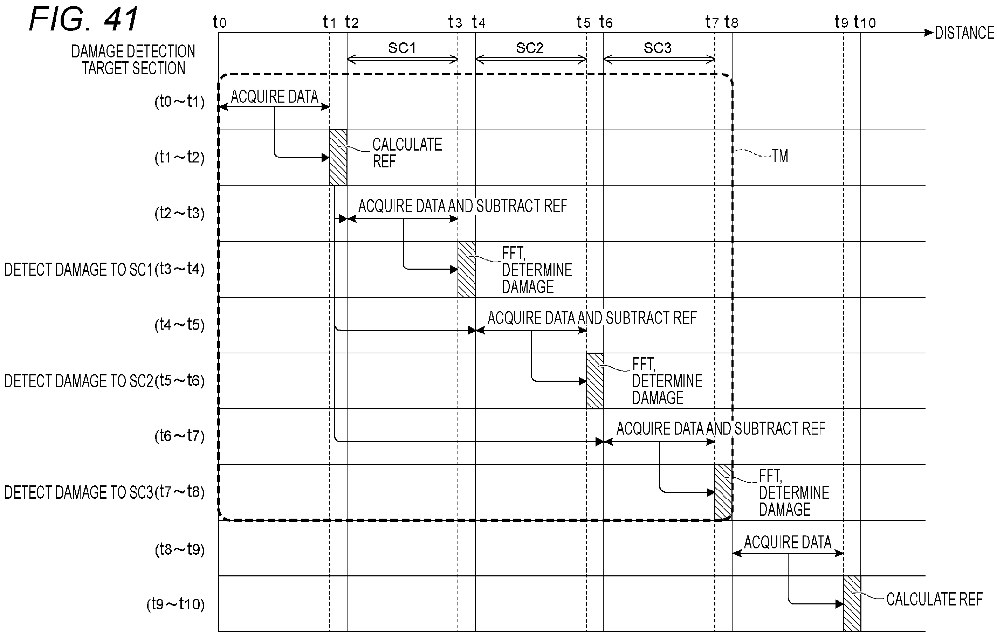

FIG. 41 is a diagram showing a time chart 2 until the damage determination of the rolling bearing is executed based on the detection waveform K. The time chart 2 in FIG. 41 is a control example that can be executed even when the calculation processing capability of the control unit 24 is relatively low. In this control, first, the output signal from the sensor is acquired during the elapsed times t₀ to t₁. During the next elapsed period t₁ to t₂, the detection waveform K is generated, and the reference waveform is generated based on the detection waveform K. Next, while the output signal from the sensor is acquired during a elapsed period t₂ to t₃ to generate the detection waveform K, the reference waveform obtained during the previous elapsed period t₁ to t₂ is subtracted from the detection waveform K to obtain a difference waveform (a rotation fluctuation waveform). Then, between elapsed times t₃ and t₄, the rotation fluctuation waveform is subjected to frequency analysis by Fast Fourier Transform (FFT) or the like to execute the damage determination. In this way, the abnormality determination of the damage detection target section SC1 in the elapsed times t₂ to t₃ is completed in the period from t₀ to t₄. In this case, the damage determination of SC1 uses the reference waveform based on the information between the elapsed times t₀ and t₁. However, since the reference waveform is close to the period of SC1, no large change occurs and no incompatibility occurs.

Further, while the output signal from the sensor is acquired between elapsed times t₄ to t₅ to generate the detection waveform K, the reference waveform obtained during the previous elapsed period t₁ to t₂ is subtracted from the detection waveform K to obtain a difference waveform (a rotation fluctuation waveform). Then, between elapsed times t₅ and t₆, the rotation fluctuation waveform is subjected to frequency analysis by FFT or the like to execute the damage determination. In this way, the abnormality determination of the damage detection target section SC2 in the elapsed times t₄ to t₅ is completed in the period from t₄ to t₆. Similarly, the damage determination of the damage detection target section SC3 in elapsed times t₆ to t₇ is completed in the period from t₆ to t₈. Thereafter, the same processing is sequentially and repeatedly executed. In the period (the period surrounded by the broken line TM) from t₀ to t₈ described above, the damage determination of the damage detection target sections SC1, SC2, and SC3 using the reference waveform obtained in the elapsed period from t₁ to t₂ in common is completed.

In this control, the damage determination in the periods of SC1, SC2, and SC3 is executed based on a result obtained by commonly using the reference waveforms obtained in the elapsed period t₁ to t₂. Accordingly, the damage determination can be executed while reducing the calculation load of the control unit.

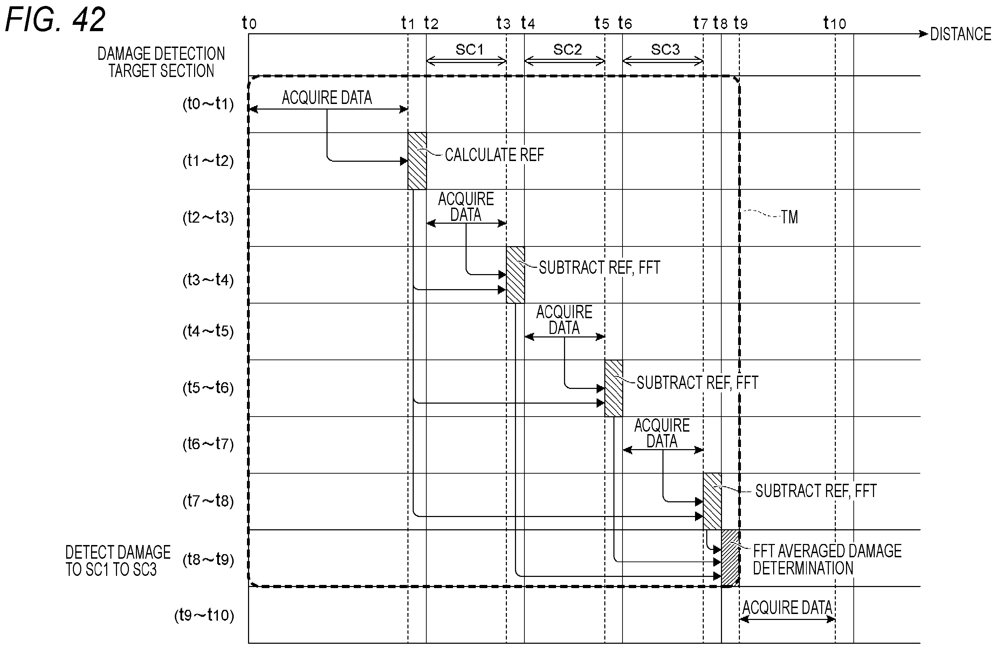

FIG. 42 is a diagram showing a time chart 3 until the damage determination of the rolling bearing is executed based on the detection waveform K. The time chart 3 in FIG. 42 is a control example that can be executed even when the calculation processing capability of the control unit 24 is further low. In this control, first, the output signal from the sensor is acquired during the elapsed times t₀ to t₁. Next, during the elapsed period t₁ to t₂, the detection waveform K is generated, and the reference waveform is generated based on the detection waveform K. Then, the output signal from the sensor is acquired between the elapsed times t₂ to t₃, the detection waveform K of the output signal is generated during the elapsed period t₃ to t₄, and the reference waveform generated during t₁ to t₂ is subtracted from the detection waveform K to obtain a difference waveform (a rotation fluctuation waveform). In this period, the difference waveform between t₁ and t₂ is subjected to frequency analysis.

Next, the output signal from the sensor is acquired during the elapsed period t₄ to t₅, the detection waveform K of the output signal is generated during t₅ to t₆, and the reference waveform generated during t₁ to t₂ is subtracted from the detection waveform K to obtain a difference waveform (a rotation fluctuation waveform). In this period, the difference waveform between t₄ and t₅ is subjected to frequency analysis.

Similarly, the output signal from the sensor is acquired during the elapsed period t₆ to t₇, the detection waveform K of the output signal is generated during t₆ to t₇, and the reference waveform generated during t₁ to t₂ is subtracted to obtain a difference waveform (a rotation fluctuation waveform). In this period, the difference waveform between t₆ and t₇ is subjected to frequency analysis. In the elapsed period t₈ to t₉, the results of the frequency analysis obtained in t₃ to t₄ (corresponding to SC1), t₅ to t₆ (corresponding to SC2), and t₇ to t₈ (corresponding to SC3) are averaged to execute the damage determination in the periods of SC1, SC2, and SC3.

In this control, the damage determination in the periods of SC1, SC2, and SC3 is executed based on a result obtained by commonly using the reference waveforms obtained in the elapsed period t₁ to t₂. The frequency analysis is divided and executed for each period, so that the damage determination can be executed while further reducing the calculation load of the control unit.

In the control examples described above, by setting the section of the subtraction processing or the frequency analysis of the reference waveform having a large calculation load to be excluded from the damage detection target section, efficient calculation can be executed even when the calculation capability of the control unit 24 is relatively low. Since the difference waveform (the rotation fluctuation waveform) is obtained using the reference waveform generated based on the information under the same condition as that at the time of measurement of the detection waveform K or the reference waveform generated under a condition close to that at the time of measurement, the accuracy of the reference waveform is high, and more accurate damage determination can be executed.

The bearing damage detection method described above is also applicable to a single row bearing. A hub unit bearing used as a support mechanism of a vehicle includes an encoder, a wheel speed sensor, a circuit for processing the signal from the sensor, and the like. In this case, by improving the performance of the hardware, it is possible to easily achieve the processing of the bearing damage inspection method described above by changing the control content, that is, changing or adding software and improving the performance of the hardware (improving the processing speed or the like) without newly adding a system. In a double row bearing such as a hub unit bearing, even if the sensor and the encoder are provided only in one row without being individually provided in respective rows, it is possible to detect damage in either of the two rows.

As described above, the present invention is not limited to the embodiments described above, and combinations of the configurations of the embodiments and changes and modifications made by those skilled in the art based on the descriptions in the description and the well-known technique are intended by the present invention and are thus also included within the scope of the present invention to be protected.

For example, depending on the type of the sensor, the waveform of the output signal may be disturbed, or additional information may be superimposed on the output signal. In this case, appropriate signal processing, processing circuit, and the like may also be added to generate the desired pulse waveform described above. That is, necessary processing may be appropriately added according to the waveform of the signal acquired from the sensor, and the steps of the damage detection described above may be executed.

As described above, the following matters are disclosed in the present description.
(1) A bearing damage detection system including:
   a rotation sensor configured to detect rotation of a rolling bearing and output a rotation signal;
   a rotation fluctuation extraction unit configured to extract rotation fluctuation of the rolling bearing from the rotation signal and generate a rotation fluctuation signal;
   a frequency analysis unit configured to execute frequency analysis on a waveform of the rotation fluctuation signal and obtain a frequency characteristic;
   a peak intensity calculation unit configured to obtain a peak intensity corresponding to bearing damage based on the frequency characteristic; and
   a damage detection unit configured to detect bearing damage of the rolling bearing based on the peak intensity.

According to the bearing damage detection system, when the rolling bearing has bearing damage, by obtaining the rotation fluctuation signal selectively extracting the rotation fluctuation due to the bearing damage, the peak intensity corresponding to the bearing damage can be easily obtained based on the result of the frequency analysis on the rotation fluctuation signal.

(2) The bearing damage detection system according to (1), further including
a pulse signal generation unit configured to convert the rotation signal into a pulse signal synchronized with rotation of the rolling bearing,
in which the rotation fluctuation extraction unit
   obtains, for each pulse of the pulse signal, a pulse period waveform representing a transition of a pulse period Tp of the pulse and a rotation period waveform representing a transition of a rotation period T of one rotation of the rolling bearing centered on any one of the pulses of the pulse signal, and
   obtains a waveform of the rotation fluctuation signal based on a period ratio waveform representing a ratio Tp/T between the pulse period Tp and the rotation period T.

According to this bearing damage detection system, the influence of the rotation speed error can be removed from the rotation fluctuation signal using the period ratio waveform representing the ratio Tp/T between the pulse period Tp and the rotation period T.

(3) The bearing damage detection system according to (2),
in which the rotation fluctuation extraction unit obtains the waveform of the rotation fluctuation signal based on a period ratio difference waveform representing a difference between the period ratio waveform and a period ratio smoothed waveform obtained by smoothing the period ratio waveform.

According to this bearing damage detection system, the influence of the rotation unevenness error can be removed from the rotation fluctuation signal using the period ratio difference waveform.

(4) The bearing damage detection system according to (3),
in which the rotation fluctuation extraction unit
obtains a period ratio average value waveform obtained by averaging the differences corresponding to the same rotation position of the rolling bearing in the period ratio difference waveform for each rotation position, and
obtains the waveform of the rotation fluctuation signal based on a period ratio fluctuation waveform obtained by obtaining a difference between the period ratio difference waveform and the period ratio average value waveform for each rotation position.

According to this bearing damage detection system, the influence of the detection error of the rotation position of the rotation sensor can be removed from the rotation fluctuation signal using the period ratio fluctuation waveform.

(5) The bearing damage detection system according to (4),
in which the period ratio average value waveform is a waveform obtained using the rotation signal in which the period ratio difference waveform is obtained or a rotation signal continuously output following the rotation signal.

According to this bearing damage detection system, the period ratio average value waveform is obtained according to the rotation signal in which the period ratio difference waveform is obtained or the subsequent rotation signal, so that the difference between the period ratio difference waveform and the period ratio average value waveform acquired simultaneously or at substantially the same timing in time series is obtained. Therefore, it is possible to accurately detect damage without being affected by a condition change over time.

(6) The bearing damage detection system according to (1),
in which the rotation sensor includes a first rotation sensor configured to detect rotation at one end portion in a horizontal direction and a second rotation sensor configured to detect rotation at the other end portion in the horizontal direction at an intermediate position of the rolling bearing in a vertical direction.

According to this bearing damage detection system, since the difference signal between the sensor output signals from the two rotation sensors cancels the delay or advance of the phase of each sensor output signal, a rotation signal waveform having less noise is obtained.

(7) The bearing damage detection system according to (6),
in which the rotation signal is a first pulse signal output from the first rotation sensor and a second pulse signal output from the second rotation sensor,
in which, for a pulse of the first pulse signal or the second pulse signal, a rotation period waveform representing a transition of a rotation period T of one rotation of the rolling bearing centered on the pulse and a phase difference waveform representing a transition of a phase difference PD between pulses of the first pulse signal and the second pulse signal are obtained, and
in which a waveform of the rotation fluctuation signal is obtained based on a phase difference ratio waveform representing a ratio PD/T between the phase difference PD and the rotation period T.

According to this bearing damage detection system, the influence of the rotation speed error can be removed from the rotation fluctuation signal using the phase difference ratio waveform representing the ratio PD/T between the phase difference PD and the rotation period T.

(8) The bearing damage detection system according to (7),
in which the rotation fluctuation extraction unit obtains the waveform of the rotation fluctuation signal based on a phase difference ratio difference waveform representing a difference between the phase difference ratio waveform and a phase difference ratio smoothed waveform obtained by smoothing the phase difference ratio waveform.

According to this bearing damage detection system, the influence of the rotation unevenness error can be removed from the rotation fluctuation signal using the phase difference ratio difference waveform.

(9) The bearing damage detection system according to (8),
in which the rotation fluctuation extraction unit
obtains a phase difference ratio average value waveform obtained by averaging the differences corresponding to the same rotation position of the rolling bearing in the phase difference ratio difference waveform for each rotation position, and
obtains the waveform of the rotation fluctuation signal based on a phase difference ratio fluctuation waveform obtained by obtaining a difference between the phase difference ratio difference waveform and the phase difference ratio average value waveform for each rotation position.

According to this bearing damage detection system, the influence of the detection error of the rotation position of the rotation sensor can be removed from the rotation fluctuation signal using the phase difference ratio fluctuation waveform.

(10) The bearing damage detection system according to (9),
in which the phase difference ratio average value waveform is a waveform obtained using the rotation signal in which the phase difference ratio difference waveform is obtained or a rotation signal continuously output following the rotation signal.

According to this bearing damage detection system, the phase difference ratio average value waveform is obtained according to the rotation signal in which the phase difference ratio difference waveform is obtained or the subsequent rotation signal, so that the difference between the phase difference ratio difference waveform and the phase difference ratio average value waveform acquired simultaneously or at substantially the same timing in time series is obtained. Therefore, it is possible to accurately detect damage without being affected by a condition change over time.

(11) The bearing damage detection system according to any one of (1) to (10),
in which the rolling bearing is a single row bearing or a double row bearing.

According to this bearing damage detection system, it is possible to detect damage that has occurred in either the single row bearing or the double row bearing.

(12) The bearing damage detection system according to (11),
in which the rolling bearing is a hub unit bearing including an inner ring member, an outer ring member, a plurality of rolling elements provided between the inner ring member and the outer ring member, a flange provided on at least one of the inner ring member and the outer ring member, and a wheel speed sensor configured to detect a rotation speed of the inner ring member, and
in which the wheel speed sensor functions as the rotation sensor.

According to this bearing damage detection system, the wheel speed sensor provided in the hub unit bearing can be used as the rotation sensor as it is.

(13) A bearing damage detection method including:
detecting rotation of a rolling bearing and generating a rotation signal;
extracting rotation fluctuation of the rotation from the rotation signal and generating a rotation fluctuation signal;
executing frequency analysis on a waveform of the rotation fluctuation signal and obtaining a vibration peak;
obtaining a peak intensity corresponding to bearing damage based on the vibration peak; and
detecting bearing damage of the rolling bearing based on the peak intensity.

According to the bearing damage detection method, when the rolling bearing has bearing damage, by obtaining the rotation fluctuation signal selectively extracting the rotation fluctuation due to the bearing damage, the peak intensity corresponding to the bearing damage can be easily obtained based on the result of the frequency analysis on the rotation fluctuation signal.

(14) The bearing damage detection method according to (13),
in which the rotation signal is a pulse signal synchronized with rotation of the rolling bearing,
in which, for each pulse of the pulse signal, a rotation period waveform representing a transition of a rotation period of one rotation of the rolling bearing centered on the pulse is obtained,
in which a pulse period waveform representing a transition of a pulse period of each pulse in the pulse signal is obtained; and
in which a waveform of the rotation fluctuation signal is obtained based on a period ratio waveform representing a ratio Tp/T between the pulse period Tp and the rotation period T.

According to this bearing damage detection method, the influence of the rotation speed error can be removed from the rotation fluctuation signal using the period ratio waveform representing the ratio Tp/T between the pulse period Tp and the rotation period T.

(15) The bearing damage detection method according to (14),
in which the waveform of the rotation fluctuation signal is obtained based on a period ratio difference waveform representing a difference between the period ratio waveform and a period ratio smoothed waveform obtained by smoothing the period ratio waveform.

According to this bearing damage detection method, the influence of the rotation unevenness error can be removed from the rotation fluctuation signal using the period ratio difference waveform.

(16) The bearing damage detection method according to (15),
in which a period ratio average value waveform is obtained by averaging the differences corresponding to the same rotation position of the rolling bearing in the period ratio difference waveform for each rotation position, and
in which the waveform of the rotation fluctuation signal is obtained based on a period ratio fluctuation waveform obtained by obtaining a difference between the period ratio difference waveform and the period ratio average value waveform for each rotation position.

According to this bearing damage detection method, the influence of the detection error of the rotation position of the rotation sensor can be removed from the rotation fluctuation signal using the period ratio fluctuation waveform.

(17) The bearing damage detection method according to (16),
in which the period ratio average value waveform is obtained using the rotation signal in which the period ratio difference waveform is obtained or a rotation signal continuously output following the rotation signal.

According to this bearing damage detection method, the period ratio average value waveform is obtained according to the rotation signal in which the period ratio difference waveform is obtained or the subsequent rotation signal, so that the difference between the period ratio difference waveform and the period ratio average value waveform acquired simultaneously or at substantially the same timing in time series is obtained. Therefore, it is possible to accurately detect damage without being affected by a condition change over time.

(18) The bearing damage detection method according to (13),
in which, for a pulse of a first pulse signal based on the rotation signal detected at one end portion in a horizontal direction or a pulse of a second pulse signal based on the rotation signal detected at the other end portion in the horizontal direction at an intermediate position of the rolling bearing in a vertical direction, a rotation period waveform representing a transition of a rotation period T of one rotation of the rolling bearing centered on the pulse and a phase difference waveform representing a transition of a phase difference PD between pulses of the first pulse signal and the second pulse signal are obtained, and
in which a waveform of the rotation fluctuation signal is obtained based on a phase difference ratio waveform representing a ratio PD/T between the phase difference PD and the rotation period T.

According to this bearing damage detection system, the influence of the rotation speed error can be removed from the rotation fluctuation signal using the phase difference ratio waveform representing the ratio PD/T between the phase difference PD and the rotation period T.

(19) The bearing damage detection method according to (18),
in which the waveform of the rotation fluctuation signal is obtained based on a phase difference ratio difference waveform representing a difference between the phase difference ratio waveform and a phase difference ratio smoothed waveform obtained by smoothing the phase difference ratio waveform.

According to this bearing damage detection method, the influence of the rotation unevenness error can be removed from the rotation fluctuation signal using the phase difference ratio difference waveform.

(20) The bearing damage detection method according to (19),
in which a phase difference ratio average value waveform is obtained by averaging the differences corresponding to the same rotation position of the rolling bearing in the phase difference ratio difference waveform for each rotation position, and
in which the waveform of the rotation fluctuation signal is obtained based on a phase difference ratio fluctuation waveform obtained by obtaining a difference between the phase difference ratio difference waveform and the phase difference ratio average value waveform for each rotation position.

According to this bearing damage detection method, the influence of the detection error of the rotation position of the rotation sensor can be removed from the rotation fluctuation signal using the phase difference ratio fluctuation waveform.

(21) The bearing damage detection method according to (20),
in which the phase difference ratio average value waveform is obtained using the rotation signal in which the phase difference ratio difference waveform is obtained or a rotation signal continuously output following the rotation signal.

According to this bearing damage detection method, the phase difference ratio average value waveform is obtained according to the rotation signal in which the phase difference ratio difference waveform is obtained or the subsequent rotation signal, so that the difference between the phase difference ratio difference waveform and the phase difference ratio average value waveform acquired simultaneously or at substantially the same timing in time series is obtained. Therefore, it is possible to accurately detect damage without being affected by a condition change over time.

The present application is based on a Japanese patent application (JP2023-220644A) filed on December 27, 2023 and a Japanese patent application (JP2024-176654A) filed on October 8, 2024, and contents thereof are incorporated herein by reference.

### REFERENCE SIGNS LIST

11, 11A: hub unit bearing
13: outer ring
15: hub
17, 17A: rolling element
19: rotation detection device
21, 22: sensor
21a, 22a: detection surface
23, 23A: pulse signal generation unit
24: control unit
24A: rotation fluctuation extraction unit
24B: frequency analysis unit
24C: peak intensity calculation unit
24D: damage detection unit
25: stationary side flange
27, 29: outer ring raceway
31: hub shaft
33: inner ring
35: attachment flange
35a: insertion hole
37: hub bolt
39, 45: inner ring raceway
41: small diameter step portion
43: crimping portion
47: cage
49A: bearing portion in outer row
49B: bearing portion in inner row
51: seal ring
53: internal space
55: magnetic encoder
55a: support ring
55b: encoder body
59: side cover
100, 200: bearing damage detection system

## Claims

1. A bearing damage detection system comprising:
a rotation sensor configured to detect rotation of a rolling bearing and output a rotation signal;
a rotation fluctuation extraction unit configured to extract rotation fluctuation of the rolling bearing from the rotation signal and generate a rotation fluctuation signal;
a frequency analysis unit configured to execute frequency analysis on a waveform of the rotation fluctuation signal and obtain a frequency characteristic;
a peak intensity calculation unit configured to obtain a peak intensity corresponding to bearing damage based on the frequency characteristic; and
a damage detection unit configured to detect bearing damage of the rolling bearing based on the peak intensity.

2. The bearing damage detection system according to claim 1, further comprising
a pulse signal generation unit configured to convert the rotation signal into a pulse signal synchronized with rotation of the rolling bearing,
wherein the rotation fluctuation extraction unit
obtains, for each pulse of the pulse signal, a pulse period waveform representing a transition of a pulse period Tp of the pulse and a rotation period waveform representing a transition of a rotation period T of one rotation of the rolling bearing centered on any one of the pulses of the pulse signal, and
obtains a waveform of the rotation fluctuation signal based on a period ratio waveform representing a ratio Tp/T between the pulse period Tp and the rotation period T.

3. The bearing damage detection system according to claim 2,
wherein the rotation fluctuation extraction unit obtains the waveform of the rotation fluctuation signal based on a period ratio difference waveform representing a difference between the period ratio waveform and a period ratio smoothed waveform obtained by smoothing the period ratio waveform.

4. The bearing damage detection system according to claim 3,
wherein the rotation fluctuation extraction unit
obtains a period ratio average value waveform obtained by averaging the differences corresponding to the same rotation position of the rolling bearing in the period ratio difference waveform for each rotation position, and
obtains the waveform of the rotation fluctuation signal based on a period ratio fluctuation waveform obtained by obtaining a difference between the period ratio difference waveform and the period ratio average value waveform for each rotation position.

5. The bearing damage detection system according to claim 4,
wherein the period ratio average value waveform is a waveform obtained using the rotation signal in which the period ratio difference waveform is obtained or a rotation signal continuously output following the rotation signal.

6. The bearing damage detection system according to claim 1,
wherein the rotation sensor includes a first rotation sensor configured to detect rotation at one end portion in a horizontal direction and a second rotation sensor configured to detect rotation at the other end portion in the horizontal direction at an intermediate position of the rolling bearing in a vertical direction.

7. The bearing damage detection system according to claim 6,
wherein the rotation signal is a first pulse signal output from the first rotation sensor and a second pulse signal output from the second rotation sensor,
wherein, for a pulse of the first pulse signal or the second pulse signal, a rotation period waveform representing a transition of a rotation period T of one rotation of the rolling bearing centered on the pulse and a phase difference waveform representing a transition of a phase difference PD between pulses of the first pulse signal and the second pulse signal are obtained, and
wherein a waveform of the rotation fluctuation signal is obtained based on a phase difference ratio waveform representing a ratio PD/T between the phase difference PD and the rotation period T.

8. The bearing damage detection system according to claim 7,
wherein the rotation fluctuation extraction unit obtains the waveform of the rotation fluctuation signal based on a phase difference ratio difference waveform representing a difference between the phase difference ratio waveform and a phase difference ratio smoothed waveform obtained by smoothing the phase difference ratio waveform.

9. The bearing damage detection system according to claim 8,
wherein the rotation fluctuation extraction unit
obtains a phase difference ratio average value waveform obtained by averaging the differences corresponding to the same rotation position of the rolling bearing in the phase difference ratio difference waveform for each rotation position, and
obtains the waveform of the rotation fluctuation signal based on a phase difference ratio fluctuation waveform obtained by obtaining a difference between the phase difference ratio difference waveform and the phase difference ratio average value waveform for each rotation position.

10. The bearing damage detection system according to claim 9,
wherein the phase difference ratio average value waveform is a waveform obtained using the rotation signal in which the phase difference ratio difference waveform is obtained or a rotation signal continuously output following the rotation signal.

11. The bearing damage detection system according to any one of claims 1 to 10,
wherein the rolling bearing is a single row bearing or a double row bearing.

12. The bearing damage detection system according to claim 11,
wherein the rolling bearing is a hub unit bearing including an inner ring member, an outer ring member, a plurality of rolling elements provided between the inner ring member and the outer ring member, a flange provided on at least one of the inner ring member and the outer ring member, and a wheel speed sensor configured to detect a rotation speed of the inner ring member, and
wherein the wheel speed sensor functions as the rotation sensor.

13. A bearing damage detection method comprising:
detecting rotation of a rolling bearing and generating a rotation signal;
extracting rotation fluctuation of the rotation from the rotation signal and generating a rotation fluctuation signal;
executing frequency analysis on a waveform of the rotation fluctuation signal and obtaining a vibration peak;
obtaining a peak intensity corresponding to bearing damage based on the vibration peak; and
detecting bearing damage of the rolling bearing based on the peak intensity.

14. The bearing damage detection method according to claim 13,
wherein the rotation signal is a pulse signal synchronized with rotation of the rolling bearing,
wherein, for each pulse of the pulse signal, a rotation period waveform representing a transition of a rotation period of one rotation of the rolling bearing centered on the pulse is obtained,
wherein a pulse period waveform representing a transition of a pulse period of each pulse in the pulse signal is obtained; and
wherein a waveform of the rotation fluctuation signal is obtained based on a period ratio waveform representing a ratio Tp/T between the pulse period Tp and the rotation period T.

15. The bearing damage detection method according to claim 14,
wherein the waveform of the rotation fluctuation signal is obtained based on a period ratio difference waveform representing a difference between the period ratio waveform and a period ratio smoothed waveform obtained by smoothing the period ratio waveform.

16. The bearing damage detection method according to claim 15,
wherein a period ratio average value waveform is obtained by averaging the differences corresponding to the same rotation position of the rolling bearing in the period ratio difference waveform for each rotation position, and
wherein the waveform of the rotation fluctuation signal is obtained based on a period ratio fluctuation waveform obtained by obtaining a difference between the period ratio difference waveform and the period ratio average value waveform for each rotation position.

17. The bearing damage detection method according to claim 16,
wherein the period ratio average value waveform is obtained using the rotation signal in which the period ratio difference waveform is obtained or a rotation signal continuously output following the rotation signal.

18. The bearing damage detection method according to claim 13,
wherein, for a pulse of a first pulse signal based on the rotation signal detected at one end portion in a horizontal direction or a pulse of a second pulse signal based on the rotation signal detected at the other end portion in the horizontal direction at an intermediate position of the rolling bearing in a vertical direction, a rotation period waveform representing a transition of a rotation period T of one rotation of the rolling bearing centered on the pulse and a phase difference waveform representing a transition of a phase difference PD between pulses of the first pulse signal and the second pulse signal are obtained, and
wherein a waveform of the rotation fluctuation signal is obtained based on a phase difference ratio waveform representing a ratio PD/T between the phase difference PD and the rotation period T.

19. The bearing damage detection method according to claim 18,
wherein the waveform of the rotation fluctuation signal is obtained based on a phase difference ratio difference waveform representing a difference between the phase difference ratio waveform and a phase difference ratio smoothed waveform obtained by smoothing the phase difference ratio waveform.

20. The bearing damage detection method according to claim 19,
wherein a phase difference ratio average value waveform is obtained by averaging the differences corresponding to the same rotation position of the rolling bearing in the phase difference ratio difference waveform for each rotation position, and
wherein the waveform of the rotation fluctuation signal is obtained based on a phase difference ratio fluctuation waveform obtained by obtaining a difference between the phase difference ratio difference waveform and the phase difference ratio average value waveform for each rotation position.

21. The bearing damage detection method according to claim 20,
wherein the phase difference ratio average value waveform is obtained using the rotation signal in which the phase difference ratio difference waveform is obtained or a rotation signal continuously output following the rotation signal.
